# EUROPEAN PATENT APPLICATION

(11) **EP 4 769 748 A1**
(43) Date of publication of application: **01.07.2026**
(21) Application number: 23962902.5
(22) Date of filing: 29.12.2023
(51) Int. Cl.: H01M 50/342, H01M 50/143

(54) **BATTERY CELL, BATTERY, AND ELECTRIC DEVICE**

(71) Applicant: Contemporary Amperex Technology Co., Limited, Ningde, Fujian 352100 (CN)
(72) Inventor: WU, Kai, Ningde, Fujian 352100 (CN); GU, Mingguang, Ningde, Fujian 352100 (CN); LI, Yao, Ningde, Fujian 352100 (CN); LI, Wei, Ningde, Fujian 352100 (CN); LI, Quankun, Ningde, Fujian 352100 (CN); CHEN, Weike, Ningde, Fujian 352100 (CN); GAN, Jiuqiang, Ningde, Fujian 352100 (CN); HUANG, Xiuxue, Ningde, Fujian 352100 (CN)
(74) Representative: Gong, Jinping
(86) International application number: PCT/CN2023/143583
(87) International publication number: WO 2025/138228

(57) **Abstract**

Embodiments of the present application provide a battery cell, a battery, and an electrical device. The battery cell includes a shell and a pressure relief component, where the pressure relief component is arranged on a first wall portion of the shell. The pressure relief component is provided with a first groove and a second groove, the first groove defines at least one predetermined pressure relief region, the pressure relief component is configured to be able to split along at least a part of the first groove when the battery cell releases pressure, the pressure relief component has a first surface and a second surface opposite to each other, the second groove is arranged in the first surface, and the second groove is configured to guide at least a part of the predetermined pressure relief region to flip. The second groove includes a first groove side surface and a second groove side surface arranged opposite to each other, the first groove side surface is closer to the predetermined pressure relief region than the second groove side surface, and an angle formed between the first groove side surface and the first surface is less than an angle formed between the second groove side surface and the first surface. The risk of the predetermined pressure relief region being opened prematurely due to poor surface flatness can be reduced, thereby prolonging the service life of the battery cell.

## Description

### TECHNICAL FIELD

The present application relates to the technical field of batteries, and in particular, to a battery cell, a battery, and an electrical device.

### BACKGROUND

With the development of the new energy technologies, batteries are increasingly widely applied, such as applied in mobile phones, laptop computers, battery vehicles, electric vehicles, electric planes, electric ships, electric toy cars, electric toy ships, electric toy planes, and electric tools.

A battery cell is generally provided with a pressure relief component which is configured to release pressure in the battery cell when the battery cell experiences thermal runaway so as to improve the reliability of the battery cell. In the battery technology, both the reliability and the service life of battery cell need to be considered. Therefore, how to improve the service life of the battery cell is an urgent problem to be solved in the battery technology.

### SUMMARY

Embodiments of the present application provide a battery cell, a battery, and an electrical device, which can effectively improve the flatness of a surface of a pressure relief component.

In a first aspect, an embodiment of the present application provides a battery cell, including a shell and a pressure relief component, where the shell includes a first wall portion, and the pressure relief component is arranged on the first wall portion; the pressure relief component is provided with a first groove and a second groove, the first groove defines at least one predetermined pressure relief region, the pressure relief component is configured to be able to split along at least a part of the first groove when the battery cell releases pressure, in a thickness direction of the first wall portion, the pressure relief component has a first surface and a second surface opposite to each other, the second groove is recessed from the first surface toward the second surface, the second groove is configured to guide at least a part of the predetermined pressure relief region to flip so as to open at least a part of the predetermined pressure relief region; where in a width direction of the second groove, the second groove includes a first groove side surface and a second groove side surface arranged opposite to each other and connected to the first surface, the first groove side surface is closer to the predetermined pressure relief region than the second groove side surface, the first groove side surface is at an angle a to the first surface, and the second groove side surface is at an angle b to the first surface, satisfying: 90°≤a<b<180°, and the width direction of the second groove is perpendicular to the thickness direction of the first wall portion.

In the above technical solution, the pressure relief component is provided with the first groove, and the first groove defines the at least one predetermined pressure relief region, so that the pressure relief component can be split along at least a part of the first groove when the battery cell release pressure to open the predetermined pressure relief region to release the internal pressure of the battery cell. The pressure relief component is also provided with the second groove, which can guide at least a part of the predetermined pressure relief region to flip, so as to open at least a part of the predetermined pressure relief region for pressure relief. The second groove plays an auxiliary role in the predetermined pressure relief region, making it easier to flip the predetermined pressure relief region, and reducing the difficulty of flipping the predetermined pressure relief region, so that the predetermined pressure relief region can be opened more quickly during the process of the pressure relief component splitting along the first groove, thereby improving the opening rate of the predetermined pressure relief region. In addition, since 90°≤a<b<180° is equivalent to reducing the angle formed between the first groove side surface and the first surface, which can reduce the amount of an excess material extruded when forming the second groove diffusing to the predetermined pressure relief region, thereby reducing the height of a material pile bulge formed when the excess material extruded from a region of the pressure relief component provided with the second groove is accumulated in the predetermined pressure relief region, improving the flatness of the surface of the predetermined pressure relief region, reducing the risk of the predetermined pressure relief region being opened prematurely due to poor surface flatness, and prolonging the service life of the battery cell.

In some embodiments, 90°≤a≤150°. The influence of the first groove side surface on a forming tool is reduced, so that it is easier to take out the forming tool from the second groove, thereby reducing the forming difficulty of the second groove.

In some embodiments, 90°<b≤170°. the influence of the second groove side surface on a forming tool is reduced, so that it is easier to take out the forming tool from the second groove, thereby reducing the forming difficulty of the second groove.

In some embodiments, the second groove further includes a first groove bottom surface, the first groove bottom surface is connected to the first groove side surface and the second groove side surface, the second groove forms a first notch in the first surface, and in the width direction of the second groove, a width of the first groove bottom surface is L₁, and a width of the first notch is L₂, satisfying: L₁<L₂. In this way, the second groove is made into a structure with a wide top and a narrow bottom, which facilitates taking out the forming tool used for forming the second groove from the second groove, thereby facilitating forming the second groove.

In some embodiments, 0.05 mm≤L₁≤0.3 mm, and L₁≥0.05 mm, so that the groove bottom surface of the second groove has a sufficient width, which reduces the difficulty of forming the second groove on the one hand, and reduces the risk of insufficient strength of a residual portion of the second groove due to stress concentration caused by a too small width of the groove bottom surface of the second groove on the other hand. L₁≤0.3 mm, so that the groove bottom surface of the second groove is not too wide, reducing the amount of an extruded material when forming the second groove, which is beneficial to improving the flatness of the predetermined pressure relief region.

In some embodiments, 0.4 mm≤L₂≤1.2 mm. L₂≥0.4 mm, so that the first notch of the second groove has a sufficient width, reducing the difficulty of forming the second groove and enhancing the auxiliary flipping effect of the second groove on the predetermined pressure relief region; L₂≤1.2 mm, so that the first notch of the second groove is not too wide, reducing the amount of the extruded material when forming the second groove, which is beneficial to improving the flatness of the surface of the predetermined pressure relief region.

In some embodiments, a minimum residual thickness of the first groove is D₁, and a minimum residual thickness of the second groove is D₂, satisfying: D₁<D₂. The strength of a region of the pressure relief component provided with the first groove is smaller than the strength of the region of the pressure relief component provided with the second groove, so that the pressure relief component can be split preferentially along the first groove to achieve rapid opening of the predetermined pressure relief region.

In some embodiments, in the thickness direction of the first wall portion, a maximum groove depth of the first groove is H₁, and a maximum groove depth of the second groove is H₂, satisfying: H₂<H₁. By setting the maximum groove depth of the first groove to be greater than the maximum groove depth of the second groove, it is beneficial to achieving that the minimum residual thickness of the first groove is smaller than the minimum residual thickness of the second groove. During the production process, a depth of the first groove may be machined greater than a depth of the second groove, so that the minimum residual thickness of the first groove is smaller than the minimum residual thickness of the second groove.

In some embodiments, 0.3 mm≤D₂≤1.2 mm. D₂≥0.3 mm, so that the residual portion of the second groove has sufficient strength. In addition, since D₁<D₂ and D₂≥0.3 mm, a residual thickness of the first groove does not need to be machined too small, which is beneficial to reducing the machining difficulty of the first groove and improving the strength of a residual portion of the first groove during normal use of the battery cell. D₂≤1.2 mm, so that a thickness of a residual thickness portion of the second groove is not too large, thereby improving the auxiliary flipping effect of the second groove on the predetermined pressure relief region.

In some embodiments, the pressure relief component is provided with a plurality of said second grooves, the first groove defines a plurality of said predetermined pressure relief regions, and each of the predetermined pressure relief regions is arranged corresponding to at least one of the second grooves. When the battery cell experiences thermal runaway, the plurality of predetermined pressure relief regions can be all opened. When a total pressure relief area of the pressure relief component is constant, the opening rate of the predetermined pressure relief region can be increased, thereby achieving faster pressure relief.

In some embodiments, the numbers of the predetermined pressure relief regions and the second grooves are both two; the first groove includes a first groove section, and in the width direction of the second groove, the first groove section is located between the two second grooves, and the two predetermined pressure relief regions are respectively located on both sides of the first groove section, and the first groove side surface is closer to the first groove section than the second groove side surface. The first groove section of the first groove is located between the two predetermined pressure relief regions. After the pressure relief component is split along the first groove section, the two predetermined pressure relief regions can be opened oppositely to release pressure when the battery cell releases pressure, so that the two predetermined pressure relief regions can be opened quickly, which is beneficial to improving the pressure relief rate of the battery cell.

In some embodiments, in the thickness direction of the first wall portion, a projection of the second groove does not overlap with a projection of the first groove The mutual influence between the first groove and the second groove during machining is reduced, and the risk of the first groove and the second groove being connected to each other during machining is reduced.

In some embodiments, in the width direction of the second groove, the second groove and the first groove are arranged spaced apart. In this way, it is possible to achieve that the projection of the second groove in the thickness direction of the first wall portion does not overlap with the projection of the first groove in the thickness direction of the first wall portion, which can reduce the mutual influence between the first groove and the second groove during machining on the one hand, reduce the residual stress influence between the region of the pressure relief component provided with the first groove and the region of the pressure relief component provided with the second groove on the other hand, and reduce the risk that when cracks generated by the pressure relief component cracking along the first groove diffuse to the second groove, the pressure relief component is caused to cracks along the second groove.

In some embodiments, in the thickness direction of the first wall portion, two ends of the projection of the second groove in an extension direction respectively extend beyond two ends of the projection of the first groove. The second groove is made longer, thereby enhancing the auxiliary flipping effect of the second groove on the predetermined pressure relief region.

In some embodiments, the first groove is recessed from the second surface toward the first surface. The first groove and the second groove are respectively located on both sides of the pressure relief component in the thickness direction, so that the first groove and the second groove can be machined in both sides of the pressure relief component respectively, which is beneficial to reduce the mutual influence of the first groove and the second groove during machining.

In some embodiments, in a width direction of the second groove, projections of the first groove and the second groove at least partially overlap. The projections of the first groove and the second groove in the width direction of the second groove have an overlapping region, thereby, on the one hand, improving an absorption effect of the second groove on the excess material extruded when forming the first groove, and reducing the risk that when the extruded excess material of the first groove diffuses to the surface close to the shell in the width direction of the second groove, the surface is caused to be uneven; on the other hand, improving an absorption effect of the second groove on the deformation energy of the battery cell when the battery cell is subjected to internal and external forces and deforms in the width direction of the second groove, and reducing the influence of expansion and deformation of the battery cell in the width direction of the second groove on the pressure relief component.

In some embodiments, in the thickness direction of the first wall portion, the groove bottom surface of the second groove is closer to the second surface than the groove bottom surface of the first groove. This structure is conducive to achieving more overlapping regions between the projections of the second groove and the first groove in the width direction of the second groove, thereby further improving the absorption effect of the second groove on the excess material extruded when forming the first groove, and further improving the absorption effect of the second groove on the deformation energy of the battery cell when the battery cell is subjected to internal and external forces in the width direction of the second groove and deforms.

In some embodiments, in the thickness direction of the first wall portion, a maximum groove depth of the second groove is H₂, and a minimum residual thickness of the first groove is D₁, satisfying: D₁<H₂. This structure is conducive to achieving more overlapping regions between the projections of the second groove and the first groove in the width direction of the second groove, further improving the absorption effect of the second groove on the excess material extruded when forming the first groove, and further improving the absorption effect of the second groove on the deformation energy of the battery cell when the battery cell is subjected to internal and external forces in the width direction of the second groove and deforms.

In some embodiments, the first groove includes multiple stages of grooves arranged in sequence in a direction from the second surface to the first surface, and in the thickness direction of the first wall portion, in adjacent two stages of grooves, one stage of groove away from the second surface is arranged in a groove bottom surface of one stage of groove close to the second surface; where one stage of groove, arranged in the second surface, in the multiple stages of grooves is a first-stage groove, and in the width direction of the second groove, projections of the second groove and the first-stage groove at least partially overlap. By arranging the first groove as the multiple stages of grooves arranged in the thickness direction of the first wall portion, each stage of the groove can be machined one by one in the direction from the second surface to the first surface when forming the first groove, thereby reducing a forming depth of each stage of the groove, reducing a forming force borne by the pressure relief component when forming the first groove, and reducing the risk of the pressure relief component being damaged when forming the first groove. Since the projections of the first-stage groove of the first-stage groove and the second groove in the width direction of the second groove at least partially overlap, the projection of the second groove in the width direction can cover the grooves of other stages in the first groove except the first-stage groove, thereby, on the one hand, improving the absorption effect of the second groove on the excess material extruded when forming the multiple stages of grooves during machining of the first groove, and on the other hand, further improving the absorption effect of the second groove on the deformation energy of the battery cell when the battery cell is subjected to internal and external impact forces and deforms, which thus reduces the influence of the expansion and deformation of the battery cell in the width direction of the second groove on the pressure relief component.

In some embodiments, in the thickness direction of the first wall portion, the groove bottom surface of the second groove is closer to the second surface than a groove bottom surface of the first-stage groove. In this way, the projection of the second groove in the width direction can cover more portions of the first-stage groove, thereby, on the one hand, further improving the absorption effect of the second groove on the excess material extruded when forming the multiple stages of grooves during machining of the first groove, and on the other hand, further improving the absorption effect of the second groove on the deformation energy of the battery cell when the battery cell is subjected to internal and external impact forces and deforms, which thus reduces the influence of the expansion and deformation of the battery cell in the width direction of the second groove on the pressure relief component.

In some embodiments, the first groove is recessed from the first surface toward the second surface. In this way, the first groove and the second groove are arranged in the same side of the pressure relief component in the thickness direction, which makes it easier to machine the first groove and the second groove in the pressure relief component. The first groove and the second groove can be machined without flipping the pressure relief component, which is beneficial to optimizing the production rhythm of the battery cell.

In some embodiments, the first groove includes multiple stages of grooves arranged in sequence in a direction from the first surface to the second surface, and in the thickness direction of the first wall portion, in adjacent two stages of grooves, one stage of groove away from the first surface is arranged on a groove bottom surface of one stage of groove close to the first surface; where the one-stage groove, arranged in the first surface, in the multiple stages of grooves is a first-stage groove, and in the thickness direction of the first wall portion, the groove bottom surface of the first-stage groove is closer to the first surface than the groove bottom surface of the second groove. By arranging the first groove as the multiple stages of grooves arranged in the thickness direction of the first wall portion, each stage of the groove can be machined one by one in the direction from the first surface to the second surface when forming the first groove, thereby reducing a forming depth of each stage of the groove, reducing a forming force borne by the pressure relief component when forming the first groove, and reducing the risk of the pressure relief component being damaged when forming the first groove. Since the bottom groove surface of the first-stage groove is closer to the first surface than the groove bottom surface of the second groove, the projection of the second groove in the width direction at least covers the first-stage groove of the first groove, so that the second groove has a greater depth, the second groove can have a good absorption effect on the excess material extruded when forming the first-stage groove, and the second groove can have a good absorption effect on the deformation energy of the battery cell when the battery cell is subjected to internal and external impact forces and deforms.

In some embodiments, in the thickness direction of the first wall portion, a maximum groove depth of the second groove is H₂, and a maximum groove depth of the first-stage groove is H₃, satisfying: H₃<H₂. The second groove has a greater depth, the second groove can have a good absorption effect on the excess material extruded when forming the first-stage groove, and the second groove can have a good absorption effect on the deformation energy of the battery cell when the battery cell is subjected to internal and external impact forces and deforms.

In some embodiments, the first surface is a surface of the pressure relief component facing an inside of the shell. The second groove is arranged inside the pressure relief component. On the one hand, when the predetermined pressure relief region is flipped outward to open, the first groove side surface and the second groove side surface of the second groove are not likely to abut against each other, which is beneficial to increasing the opening area of the predetermined pressure relief region. On the other hand, the second groove is not exposed to an outside of the battery cell, thereby reducing the risk of oxidative corrosion of the pressure relief component in a region of the second groove. In addition, when the first groove is arranged in the first surface, the first surface is a surface of the pressure relief component facing the inside of the shell, so that the first groove is arranged inside the pressure relief component, and the first groove is not exposed to an outside of the battery cell, thereby reducing the risk of oxidative corrosion of the pressure relief component in a region of the first groove.

In some embodiments, the first surface is a surface of the pressure relief component facing an outside of the shell. The second groove is arranged outside the pressure relief component, which facilitates machining and forming the second groove outside the battery cell, and helps to reduce the difficulty of forming the second groove, so as to improve the production efficiency of the battery cell. Since the angle a formed between the first groove side surface and the first surface is less than the angle b formed between the second groove side surface and the first surface, an angle between the first groove side surface and the second groove side surface is increased, thereby increasing an opening angle of the predetermined pressure relief region when the predetermined pressure relief region is flipped outward to make the first groove side surface abut against the second groove side surface. In addition, when the first groove is arranged in the first surface, the first surface is a surface of the pressure relief component facing the outside of the shell, so that the first groove is arranged outside the pressure relief component, which is convenient for machining and forming the first groove outside the battery cell, and is conducive to reducing the difficulty of forming the first groove, so as to improve the production efficiency of the battery cell.

In some embodiments, the first groove includes a first groove section and a second groove section, the first groove section is connected to the second groove section, and the first groove section and the second groove section jointly define at least one predetermined pressure relief region. The first groove of this structure is simple in structure, the stress at the position where the first groove section is connected to the second groove section is more concentrated and thus the position is weaker, so that when the battery cell experiences thermal runaway, the pressure relief component can be quickly split from the first groove section and the second groove section after the position where the first groove section is connected to the second groove section is split, and the predetermined pressure relief region is opened more quickly to release pressure in time.

In some embodiments, the first groove includes a first groove section, a second groove section, and a third groove section, the second groove section and the third groove section are arranged opposite to each other, the first groove section is connected to the second groove section and the third groove section, in the width direction of the second groove, the first groove section and the second groove are arranged spaced apart, and the first groove section, the second groove section, and the third groove section jointly define at least one predetermined pressure relief region. The first groove of this structure makes an intersection position of the first groove section and the second groove section and a connection position between the first groove section and the third groove section weaker and easier to crack so as to open the predetermined pressure relief region for pressure relief, and can further increase an opening area of the predetermined pressure relief region, thereby increasing the pressure relief area of the battery cell and improving the pressure relief rate of the battery cell.

In some embodiments, the connection position between the second groove section and the first groove section deviates from two ends of the second groove section, and the connection position between the third groove section and the first groove section deviates from two ends of the third groove section, so that predetermined pressure relief regions are formed on both sides of the first groove section. The first groove section of the first groove is located between the two predetermined pressure relief regions, and after the pressure relief component is cracked along the first groove section, the two predetermined pressure relief regions can be opened oppositely to relieve pressure when the battery cell releases pressure, so that the two predetermined pressure relief regions can be opened quickly, which is conducive to improving the pressure relief rate of the battery cell.

In some embodiments, the first groove section extends along a linear or arc-shaped trajectory; and/or, the second groove section extends along a linear or arc-shaped trajectory; and/or, the third groove section extends along a linear or arc-shaped trajectory. If the first groove section extends along a linear trajectory, the first groove section is a linear groove, which can reduce the difficulty of forming the first groove section. If the first groove section extends along an arc-shaped trajectory, the first groove section is an arc-shaped groove, and the pressure relief component is more likely to split along the first groove section when the battery cell releases pressure, thereby achieving faster opening of the predetermined pressure relief region. If the second groove section extends along a linear trajectory, the second groove section is a linear groove, which can reduce the difficulty of forming the second groove section. If the second groove section extends along an arc-shaped trajectory, the second groove section is an arc-shaped groove, and the pressure relief component is more likely to split along the second groove section when the battery cell releases pressure, thereby achieving faster opening of the predetermined pressure relief region. If the third groove section extends along a linear trajectory, the third groove section is a linear groove, which can reduce the difficulty of forming the third groove section. If the third groove section extends along an arc-shaped trajectory, the third groove section is an arc-shaped groove, and the pressure relief component is more likely to split along the third groove section when the battery cell releases pressure, thereby achieving faster opening of the predetermined pressure relief region.

In some embodiments, the first groove extends along an arc-shaped trajectory. The first groove extends along an arc-shaped trajectory, that is, the first groove is an arc-shaped groove. The first groove of this structure includes only one groove section, which simplifies the structure of the first groove.

In some embodiments, the second groove extends along a linear trajectory. The second groove is a linear groove, with a simple structure, thereby facilitating machining and shaping.

In some embodiments, the pressure relief component and the first wall portion are integrally formed. Therefore, the first groove and the second groove can be directly formed in the first wall portion to form an integrated pressure relief structure, so that the reliability is improved, the process of mounting the pressure relief component is omitted, and the economical efficiency is higher.

In some embodiments, the pressure relief component and the first wall portion are separately arranged, and the pressure relief component is mounted on the first wall portion. The pressure relief component is a component independent of the shell. The pressure relief component and the shell may be separately produced and then assembled, such that the production difficulty is low and the efficiency is high.

In some embodiments, the first groove is formed in the pressure relief component by stamping. In this way, a forming method of the first groove is simple, which is conducive to reducing the production costs of the battery cell.

In some embodiments, the second groove is formed in the pressure relief component by stamping. In this way, a forming method of the second groove is simple, which is conducive to reducing the production costs of the battery cell.

In some embodiments, the first wall portion is a rectangular wall portion, and the first groove and the second groove are arranged in the width direction of the first wall portion. The second groove is closer to an edge of the first wall portion in the width direction of the first wall portion, so that the region of the pressure relief component provided with the second groove has higher strength, thereby reducing the risk of the pressure relief component cracking along the second groove when the battery cell releases pressure. In addition, during normal use of the battery cell, the amount of expansion of the battery cell in the width direction of the first wall portion is greater than the amount of expansion thereof in the length direction of the first wall portion, and the expansion of the battery cell in the width direction of the first wall portion has a greater influence on the pressure relief component. The first groove and the second groove are arranged in the width direction of the first wall portion, and the second groove can have a very good adsorption effect on the deformation energy of the battery cell when the battery cell expands and deforms in the width direction of the first wall portion, thereby reducing the influence of the expansion of the battery cell in the width direction of the first wall portion on the pressure relief component.

In some embodiments, the shell includes a case and an end cover. An opening is formed in at least one end of the case. The end cover corresponds to the opening one to one, and the end cover seals the opening. The at least one end cover serves as the first wall portion. Therefore, the at least one end cover has a pressure relief function, and the difficulty of forming the first groove and the second groove in the end cover or mounting the pressure relief component is reduced.

In some embodiments, the shell includes a case and an end cover. An opening is formed in at least one end of the case. The end cover corresponds to the opening one to one, and the end cover seals the opening. At least one wall portion in the case is the first wall portion. Therefore, the case has the pressure relief function, and during pressure relief of the battery cell, emissions discharged from the inside of the battery cell do not easily influence external components outside the end cover, so that the risk of the external components being damaged by the emissions is reduced.

In some embodiments, an opening is formed only in one end of the case, and a wall portion of the case arranged opposite to the end cover is the first wall portion. The case is of a structure with the opening formed in one end, which makes the structure of the entire battery cell simpler. The first wall portion is a wall portion of the case opposite to the end cover, and can realize directional pressure relief from the bottom of the case.

In some embodiments, openings are formed in opposite ends of the case, and at least one wall portion of the case is the first wall portion. The case is of a structure provided with the openings formed in the opposite ends, and an electrode assembly can be assembled into the case through any opening, which can reduce the difficulty of assembling the battery cell and improve the assembly quality of the battery cell. The case of this structure can be made longer (the openings are formed in both ends of the case in a length direction), which is beneficial to increasing the electric capacity of the battery cell.

In some embodiments, a material of the pressure relief component includes a steel material. The steel material has the characteristic of high strength, and the pressure relief component made of the steel material has better strength. When the bursting pressure of the battery cell is constant, the pressure relief component can be made thinner to reduce the volume of the pressure relief component.

In some embodiments, the steel material is carbon steel or stainless steel.

In some embodiments, a material of the pressure relief component includes an aluminum alloy. The aluminum alloy has the characteristics of light weight and good ductility, and thus it is easier to machine the first groove and the second groove in the pressure relief component.

In some embodiments, the aluminum alloy includes the following components at mass percentage: aluminum≥99.6%, copper≤0.05%, iron≤0.35%, magnesium≤0.03%, manganese≤0.03%, silicon≤0.25%, titanium≤0.03%, vanadium≤0.05%, zinc≤0.05%, and other individual elements≤0.03%. This aluminum alloy has lower hardness and better forming ability, thereby reducing the difficulty of machining the first groove and the second groove, which is beneficial to improving the accuracy of machining the first groove and the second groove, and improving the pressure relief consistency of the pressure relief component.

In some embodiments, the aluminum alloy includes the following components at mass percentage: aluminum≥96.7%, 0.05%≤copper≤0.2%, iron≤0.7%, manganese≤1.5%, silicon≤0.6%, zinc≤0.1%, other individual elements≤0.05%, and total other elements≤0.15%. The pressure relief component made of this aluminum alloy has higher hardness, higher strength, and good damage resistance.

In a second aspect, an embodiment of the present application provides a battery, including the battery cell provided in any embodiment in the first direction.

In a third aspect, an embodiment of the present application provides an electrical device, including the battery cell provided in any embodiment of the first direction. The battery cell is configured to supply electric energy to the electric device.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a schematic structural diagram of a vehicle according to some embodiments of the present application;
FIG. 2 is an exploded view of a battery provided in some embodiments of the present application;
FIG. 3 is an exploded view of a battery cell according to some embodiments of the present application;
FIG. 4 is an assembly view of the battery cell shown in FIG. 3;
FIG. 5 is a partial view of a shell shown in FIG. 4;
FIG. 6 is an A-A cross-sectional view of the shell shown in FIG. 5;
FIG. 7 is a partially enlarged view of part B in FIG. 6;
FIG. 8 is a partially enlarged view of part C in FIG. 7;
FIG. 9 is an assembly view of a battery cell according to some other embodiments of the present application;
FIG. 10 is a partial view of a shell shown in FIG. 9;
FIG. 11 is a D-D cross-sectional view of the shell shown in FIG. 10;
FIG. 12 is a partially enlarged view of part E in FIG. 11;
FIG. 13 is a partial cross-sectional view of a shell according to some embodiments of the present application;
FIG. 14 is a partially enlarged view of part F in FIG. 13;
FIG. 15 is a partial view of a shell according to some other embodiments of the present application;
FIG. 16 is a G-G cross-sectional view of the shell shown in FIG. 15;
FIG. 17 is a partial sectional view of a shell according to still some other embodiments of the present application;
FIG. 18 is a H-H cross-sectional view of the shell shown in FIG. 17;
FIG. 19 is an exploded view of a shell (an opening is formed in one end of a case, and an end cover serves as a pressure relief component) according to some embodiments of the present application;
FIG. 20 is an exploded view of a shell (an opening is formed in one end of a case, an end cover serves as a first wall portion, and a pressure relief component is mounted on the first wall portion) according to some embodiments of the present application;
FIG. 21 is an exploded view of a shell (an opening is formed in one end of a case, the case includes a first wall portion, and a pressure relief component serves as the first wall portion) according to some embodiments of the present application;
FIG. 22 is an exploded view of a shell (an opening is formed in one end of a case, the case includes a first wall portion, and a pressure relief component is mounted on the first wall portion) according to some embodiments of the present application; and
FIG. 23 is an exploded view of a battery cell according to some other embodiments of the present application.

Reference numerals: 1-shell; 11-case; 12-end cover; 13-first wall portion; 131-pressure relief hole; 14-second wall portion; 15-third wall portion; 2-electrode assembly; 21-tab; 3-electrode terminal; 4-current collecting member; 5-insulating member; 6-pressure relief component; 61-first groove; 611-first groove section; 612-second groove section; 613-third groove section; 614-groove bottom surface of the first groove; 615-first-stage groove; 62-second groove; 621-first groove side surface; 622-second groove side surface; 623-first end; 624-second end; 625-first groove bottom surface; 626-first notch; 63-predetermined pressure relief region; 64-first surface; 65-second surface; 10-battery cell; 20-box body; 201-first portion; 202-second portion; 100-battery; 200-controller; 300-motor; 1000-vehicle; W-first connecting line; X-thickness direction of the first wall portion; Y-extension direction of the second groove; Z-width direction of the second groove.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In this embodiment of the present application, the battery cell may be a secondary battery, and the secondary battery refers to a battery cell that can activate an active material in a charging mode for continuous use after the battery cell is discharged.

The battery cell includes but is not limited to a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery and the like.

The battery cell generally includes an electrode assembly. The electrode assembly includes a positive electrode, a negative electrode and a spacer. During charge-discharge of the battery cell, active ions (e.g., lithium ions) are intercalated and de-intercalated back and forth between the positive electrode and the negative electrode. The spacer is arranged between the positive electrode and the negative electrode, and can function to reduce the risk of a short circuit between the positive electrode and the negative electrode, while allowing active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, baked carbon, carbon, nickel or titanium and the like can be adopted. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, LiMn2O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium nickel cobalt aluminum oxide (e.g., LiNi_{0.85}Co_{0.15}Al_{0.05}O₂)), and a modified compound thereof, etc.

In some embodiments, a foam metal may be used as the positive electrode. The foam metal may be foam nickel, foam copper, foam aluminum, foam alloy, or foam carbon, etc. When the foam metal is used as the positive electrode, the surface of the foam metal may not be provided with a positive electrode active material, and of course, may also be provided with a positive electrode active material. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate may include a negative electrode current collector.

As an example, the negative electrode current collector may be a metal foil, a foam metal, or a composite current collector. For example, as the metal foil, silver surface-treated aluminum or stainless steel, stainless steel, copper, aluminum, nickel, baked carbon, carbon, nickel, titanium, or the like can be used. The foam metal may be nickel foam, copper foam, aluminum foam, alloy foam, etc. The composite current collector may include a high molecular material substrate and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

For example, the negative electrode plate may include a negative electrode current collector and a negative electrode active material arranged on at least one surface of the negative electrode current collector.

For example, the negative electrode current collector has two surfaces opposite to each other in its own thickness direction, and the negative electrode active material is arranged on either one or both of the two opposite surfaces of the negative electrode current collector.

For example, the negative active material for the battery cell that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector may be aluminum, and the material of the negative electrode current collector may be copper.

In some embodiments, the spacer is an isolation film. The isolation film can be any well-known porous separator with high chemical stability and mechanical stability.

As an example, the material of the isolation film may be selected from a group consisting of at least one of glass fiber, non-woven fabric, polyethylene, polypropylene, and polyvinylidene fluoride. The separator may be a single-layer film or a multi-layer composite film. When the separator is the multi-layer composite film, the materials of all layers may be the same or different. The spacer can be an independent component positioned between the positive electrode and the negative electrode, and can also be attached to the surfaces of the positive electrode and the negative electrode.

In some embodiments, the spacer is a solid electrolyte. The solid electrolyte is arranged between the positive electrode and the negative electrode, and plays roles in transmitting ions and isolating the positive electrode from the negative electrode.

In some embodiments, the battery cell further includes an electrolyte, and the electrolyte plays a role in conducting ions between the positive electrode and the negative electrode. The electrolyte may be liquid, gel or solid. The liquid electrolyte includes electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and ethyl sulfone. The solvent may be selected from ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

For example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte, and a hydride solid electrolyte.

For example, the composite solid electrolyte is formed by adding an inorganic solid electrolyte filler into the polymer solid electrolyte.

In some embodiments, the electrode assembly is of a wound structure. The positive electrode plate and the negative electrode plate are wound into the wound structure.

In some implementations, the electrode assembly is of a laminated structure.

As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

For example, the spacers can be continuously arranged between any adjacent positive electrode plates or negative electrode plates by folding or winding.

In some implementations, the electrode assembly may be cylindrical, flat, polyprismatic, or the like.

In some implementations, the electrode assembly is provided with a tab. The tab may conduct current out from the electrode assembly. The tabs include a positive tab and a negative tab.

In some embodiments, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell in another shape. The prismatic battery cell includes a square-shell battery cell, a blade-shaped battery cell, and a multi-prism battery. For example, the multi-prism battery may be a hexagonal prism battery.

The battery mentioned in the embodiments of the present application refers to a single physical module including one or more battery cells to provide a higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box body and a battery cell. The battery cell or the battery module is accommodated in the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, or an energy storage cabinet, etc.

For development of the battery technology, design factors in many aspects, such as the energy density, cycle life, discharging capacity, charging-discharging rate, and other performance parameters, should be considered at the same time. In addition, the reliability of the battery should also be considered.

In order to improve the safety of the battery cell, a pressure relief component is generally arranged in the battery cell, and the pressure relief component may be a part of the shell of the battery cell or a component mounted in the shell, and can release the pressure in the battery cell when the battery cell experiences thermal runaway.

In order to achieve timely pressure relief of the battery cell, a pressure relief groove may be formed in the pressure relief component, and a predetermined pressure relief region is defined by the pressure relief groove, so that the pressure relief component can be split along at least a part of the pressure relief groove when the battery cell releases pressure, and the predetermined pressure relief region of the pressure relief component can be quickly opened to release the pressure in the battery cell more quickly.

In order to make the predetermined pressure relief region of the pressure relief component easier to open, a flipping groove can be formed in the pressure relief component to help the pressure relief region of the pressure relief component to open, thereby reducing the difficulty of opening the pressure relief area. As for a flipping score, in a width direction of the flipping groove, the flipping groove has two opposite groove side surfaces, and inclination angles of the two groove side surfaces are the same and both are relatively large. When forming the flipping groove, an excess material extruded from the flipping groove may diffuse to the predetermined pressure relief region, so that the extruded excess material accumulates in the predetermined pressure relief region, forming a material pile bulge protruding from a surface of the predetermined pressure relief region, affecting the flatness of the surface of the predetermined pressure relief region, and causing the predetermined pressure relief region to be opened prematurely during normal use of the battery cell, which affects the service life of the battery cell. For example, if the flipping groove is formed in the surface of the pressure relief component facing the inside of the shell, it may cause the material pile bulge to be formed on the inner surface of the predetermined pressure relief region, consequently increasing the risk of components inside the shell applying an extrusion force to the material pile bulge, which causes the predetermined pressure relief region to be opened prematurely. For another example, if the flipping groove is formed in the surface of the pressure relief component facing the outside of the shell, it may cause the material pile bulge to be formed on the outer surface of the predetermined pressure relief region, consequently increasing the risk of external components applying an extrusion force to the material pile bulge, which causes the predetermined pressure relief region to be opened prematurely.

Based on the above considerations, in order to alleviate the problem that the predetermined pressure relief region is opened prematurely, which affects the service life of the battery cell, an embodiment of the present application provides a battery cell, the battery cell includes a shell and a pressure relief component, the shell includes a first wall portion, and the pressure relief component is arranged on the first wall portion. The pressure relief component is provided with a first groove (pressure relief groove) and a second groove (flipping groove), the first groove defines at least one predetermined pressure relief region, the pressure relief component is configured to be able to split along at least a part of the first groove when the battery cell releases pressure, in a thickness direction of the first wall portion, the pressure relief component has a first surface and a second surface opposite to each other, the second groove is recessed from the first surface toward the second surface, and the second groove is configured to guide at least a part of the predetermined pressure relief region to flip so as to open at least a part of the predetermined pressure relief region. In a width direction of the second groove, the second groove includes a first groove side surface and a second groove side surface arranged opposite to each other and connected to the first surface, the first groove side surface is closer to the predetermined pressure relief region than the second groove side surface, the first groove side surface is at an angle a to the first surface, and the second groove side surface is at an angle b to the first surface, satisfying: 90°≤a<b<180°.

In the battery cell, the angle formed between the first groove side surface and the first surface is less than the angle formed between the second groove side surface and the first surface, which is equivalent to reducing the angle formed between the first groove side surface and the first surface, so that the amount of an excess material extruded when forming the second groove diffusing to the predetermined pressure relief region can be reduced, thereby reducing the height of a material pile bulge formed when the excess material extruded from a region of the pressure relief component provided with the second groove is accumulated in the predetermined pressure relief region, improving the flatness of the surface of the predetermined pressure relief region, reducing the risk of the predetermined pressure relief region being opened prematurely due to poor surface flatness, and prolonging the service life of the battery cell.

The battery cell described in the embodiment of the present application is suitable for a battery and an electrical device using the battery cell.

The electrical device may be, but not limited to, a vehicle, a mobile phone, a portable device, a laptop computer, a ship, a spacecraft, an electric toy or an electric tool, etc. The vehicle may be a fuel vehicle, a gas vehicle or a new energy vehicle. The new energy vehicle may be an all-electric vehicle, a hybrid electric vehicle, an extended range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

For ease of description, in the following embodiments, the electrical device is, for example, a vehicle.

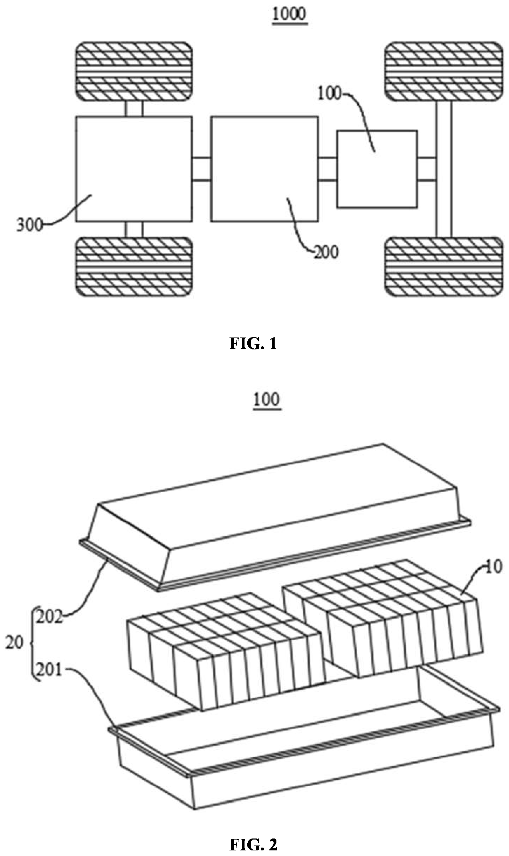

Referring to Fig. 1, Fig. 1 is a schematic structural diagram of a vehicle 1000 according to some embodiments of the present application. The interior of the vehicle 1000 is provided with a battery 100, and the battery 100 may be provided at the bottom or head or tail of the vehicle 1000. The battery 100 may be used as a power supply for the vehicle 1000, for example, the battery 100 may be used as an operating power source for the vehicle 1000.

The vehicle 1000 may further include a controller 200 and a motor 300. The controller 200 is used to control the battery 100 to supply power to the motor 300, for example, for the operating power demand when the vehicle 1000 is starting, navigating and driving.

In some examples of the present application, the battery 100 not only can serve as an operating power source of the vehicle 1000, but also can serve as a driving power source of the vehicle 1000, to provide a driving power for the vehicle 1000 in place of or partially in place of fuel or natural gas.

Referring to FIG. 2, FIG. 2 is an exploded diagram of a battery 100 according to some embodiments of the present application. The battery 100 includes a box cell 10 and a box body 20. The battery cell 10 is accommodated in the box body 20.

The box body 20 is a component for accommodating the battery cell 10, and the box body 20 provides an accommodating space for the battery cell 10. The box body 20 may be of various structures. In some embodiments, the box body 20 may include a first portion 201 and a second portion 202. The first portion 201 and the second portion 202 are configured to cover each other to define an accommodating space for accommodating the battery cell 10. The first portion 201 and the second portion 202 may be in various shapes, such as a cuboid shape, a cylinder shape, etc. The first portion 201 may be of a hollow structure with one side open, the second portion 202 may also be of a hollow structure with one side open, and the open side of the second portion 202 is configured to cover the open side of the first portion 201, so as to form the box body 20 having the accommodating space. It is also possible that the first portion 201 may be of a hollow structure with one side open, the second portion 202 may be a plate-like structure, and the second portion 202 covers the open side of the first portion 201, so as to form the box body 20 having the accommodating space. The first portion 201 and the second portion 202 may be sealed by means of a sealing element, which may be a sealing ring, a sealant, etc.

There may be one or more battery cells 10 in the battery 100. If there are a plurality of battery cells 10, the plurality of battery cells 10 may be connected in series, in parallel or in series-parallel. The series-parallel connection means that some of the plurality of battery cells 10 are connected in series and some are connected in parallel. It is possible that the plurality of battery cells 10 are connected in series or in parallel or in series-parallel first to form a plurality of battery modules, which may then be connected in series or in parallel or in series-parallel to form an entirety that is accommodated in the box body 20. Alternatively, all of the battery cells 10 may be directly connected together by series connection, or parallel connection, or parallel-series connection, and then the integral whole formed by all of the battery cells 10 is accommodated within the box body 20.

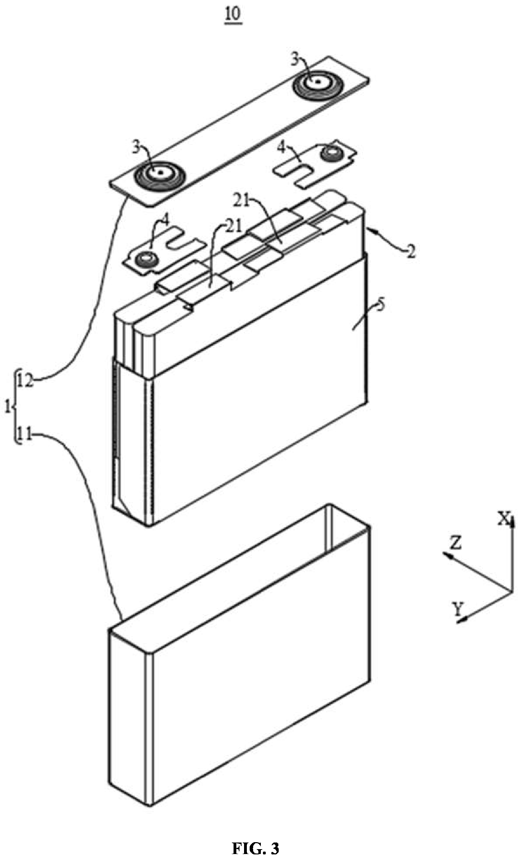

With reference to FIG. 3, FIG. 3 is an exploded view of a battery cell 10 provided by some embodiments of the present application. The battery cell 10 can include a shell 1 and an electrode assembly 2, and the electrode assembly 2 is accommodated in the shell 1.

In some embodiments, the shell 1 can include a case 11 and an end cover 12, the case 11 is provided with an opening, and the end cover 12 seals the opening of the case 11.

The case 11 is a component for accommodating the electrode assembly 2, the case 11 can be of a hollow structure with an opening formed in one end, and the case 11 can be of a hollow structure with openings formed in two opposite ends. The case 11 can be in various shapes, such as a cylinder shape, and a cuboid shape. The case 11 can be made of various materials, such as copper, iron, aluminum, steel, and aluminum alloy.

The end cover 12 is a component that closes the opening of the case 11 to isolate an internal environment of the battery cell 10 from an external environment. The end cover 12 and the case 11 jointly define an accommodating space for accommodating the electrode assembly 2, an electrolyte solution and other components. The end cover 12 can be connected to the case 11 in a welding or rolling sealing manner so as to seal the opening of the case 11. The shape of the end cover 12 can be matched with the shape of the shell 1, for example, if the case 11 is of a cuboid structure, the end cover 12 will be of a rectangular plate-shaped structure matched with the shell 1, for another example, if the case 11 is of a cylinder structure, and the end cover 12 will be of a circular plate-shaped structure matched with the case 11. The case 12 may also be made of various materials, such as copper, iron, aluminum, steel, aluminum alloy, and plastic. The material of the end cover 12 and the material of the case 11 may be the same or different.

In the embodiment where the case 11 has the opening formed in one end, one end cover 12 can be correspondingly provided. in the embodiment where the case 11 has the openings formed in opposite ends, two end covers 12 can be correspondingly arranged, the two end covers 12 seal the two openings of the case 11 respectively, and the two end covers 12 and the case 11 jointly define the accommodating space.

In some embodiments, the battery cell 10 may further include an electrode terminal 3, and the electrode terminal 3 is arranged on the shell 1 and configured to be electrically connected to a tab 21 of the electrode assembly 2 so as to output electric energy of the battery cell 10. The electrode terminal 3 may be arranged on the case 11 of the shell 1, or arranged on the end cover 12 of the shell 1. The electrode terminal 3 can be directly connected to the tab 21, for example, the electrode terminal 3 is directly welded with the tab 21. The electrode terminal 3 can also be indirectly connected to the tab 21, for example, the electrode terminal 3 is indirectly connected to the tab 21 by means of a current collecting member 4. The current collecting member 4 can be a metal conductor, such as copper, iron, aluminum, steel, and aluminum alloy.

As an example, as shown in FIG. 3, if the opening is formed in one end of the case 11, one end cover 12 is arranged in the shell 1, and one end cover 12 seals one opening of the case 11. Two electrode terminals 3 are arranged on the end cover 12, and the two electrode terminals 3 are respectively a positive electrode terminal and a negative electrode terminal; a positive electrode tab and a negative electrode tab are formed at one end of the electrode assembly 2 facing the end cover 12; and the positive electrode terminal is connected to the positive electrode tab by means of one current collecting member 4, and the negative electrode terminal is electrically connected to the negative electrode tab by means of the other current collecting member 4.

In some embodiments, with reference to FIG. 3, the battery cell 10 can further include an insulating member 5, the insulating member 5 is a component for isolating the case 11 from the electrode assembly 2, and the insulating isolation of the case 11 and the electrode assembly 2 is realized by the insulating member 5. The insulating member 5 is made of an insulating material, and the materials of the insulating member 5 include but are not limited to plastic, rubber and the like.

As an example, the insulating member 5 coats the outer side of the electrode assembly 2 in the circumferential direction of the opening of the case 11. One or a plurality of electrode assemblies 2 may arranged in the shell 1. If one electrode assembly 2 is arranged, the periphery of the electrode assembly 2 is coated with the insulating member 5; and if a plurality of electrode assemblies 2 are arranged, one insulating member 5 may be arranged corresponding to one electrode assembly 2, the periphery of one electrode assembly 2 is coated with each insulating member 5, or the plurality of electrode assemblies 2 may be used as an integral component, and the periphery of the integral component is coated with the insulating member 5.

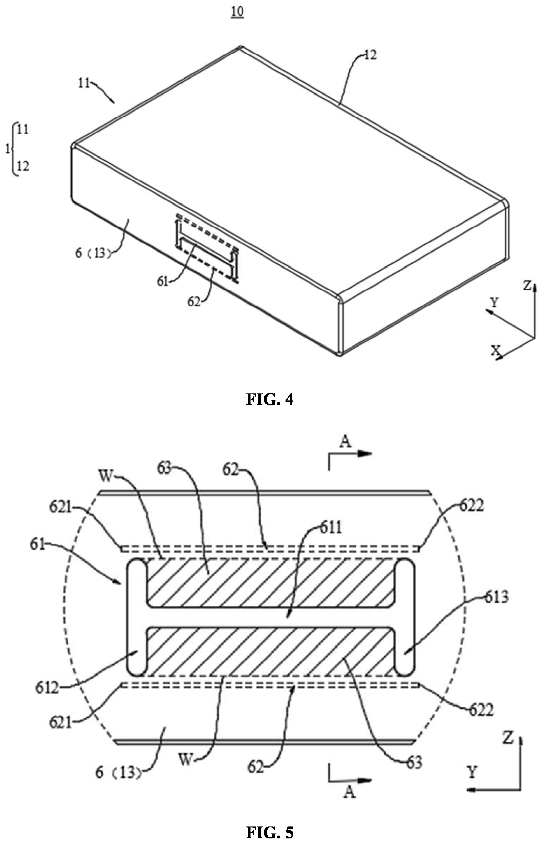

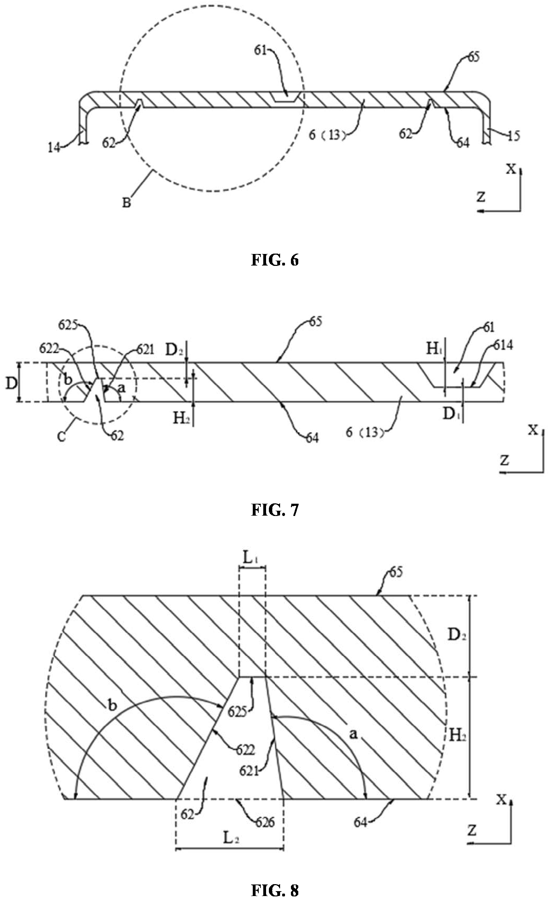

Please refer to FIG. 4 to FIG. 7, FIG. 4 is an assembly view of the battery cell 10 shown in FIG. 3; FIG. 5 is a partial view of a shell 1 shown in FIG. 4; FIG. 6 is an A-A cross-sectional view of the shell 1 shown in FIG. 5; and FIG. 7 is a partially enlarged view of part B in FIG. 6. An embodiment of the present application provides a battery cell 10, including a shell 1 and a pressure relief component 6. The shell 1 includes a first wall portion 13, and the pressure relief component 6 is arranged on the first wall portion 13. The pressure relief component 6 is provided with a first groove 61 and a second groove 62, the first groove 61 defines at least one predetermined pressure relief region 63, the pressure relief component 6 is configured to be able to split along at least a part of the first groove 61 when the battery cell 10 releases pressure, in a thickness direction X of the first wall portion, the pressure relief component 6 has a first surface 64 and a second surface 65 opposite to each other, the second groove 62 is recessed from the first surface 64 toward the second surface 65, and the second groove 62 is configured to guide at least a part of the predetermined pressure relief region 63 to flip so as to open at least a part of the predetermined pressure relief region 63. In a width direction Z of the second groove, the second groove 62 includes a first groove side surface 621 and a second groove side surface 622 arranged opposite to each other and connected to the first surface 64, the first groove side surface 621 is closer to the predetermined pressure relief region 63 than the second groove side surface 622, the first groove side surface 621 is at an angle a to the first surface 64, and the second groove side surface 622 is at an angle b to the first surface 64, satisfying: 90°≤a<b<180°, and the width direction Z of the second groove is perpendicular to the thickness direction X of the first wall portion.

The shell 1 may include a plurality of wall portions, and the plurality of wall portions together define an accommodating space inside the shell 1 to accommodate the battery cell 10, an electrolyte, and other components which may be a current collecting member 4, an insulating member 5, or the like. In the plurality of wall portions of the shell 1, it may be that one wall portion serves as the first wall portion 13, or the plurality of wall portions all serve as the first wall portion 13. Taking the case where the shell 1 is in a cuboid shape as an example, six wall portions are in the shell 1, and it may be that one, two, three, four, five or six wall portions serve as the first wall portion 13. In the shell 1, it may be that at least one end cover 12 serves as the first wall portion 13, or at least one wall portion in the case 11 serves as the first wall portion 13.

The pressure relief component 6 in the battery cell 10 is a component for releasing the pressure in the battery cell 10. The pressure relief component 6 is arranged on the first wall portion 13. The pressure relief component 6 and the first wall portion 13 may be integrally formed, or the pressure relief component 6 and the first wall portion 13 may be separately arranged. The pressure relief component 6 is mounted on the first wall portion 13. If the pressure relief component 6 and the first wall portion 13 are integrally formed, the pressure relief component 6 is at least a part of the first wall portion 13, that is, the entire first wall portion 13 may serve as the pressure relief component 6, or a part of the first wall portion 13 may serve as the pressure relief component 6.

The first groove 61 is a pressure relief groove formed in the pressure relief component 6. When the pressure in the battery cell 10 reaches the bursting pressure of the pressure relief component 6, the pressure relief component 6 can be split along at least a part of the first groove 61 to open the predetermined pressure relief region 63. It can be understood that when the battery cell 10 release pressure, the pressure relief component 6 may be split along the entire first groove 61, or may be split along a part of the first groove 61 to release the pressure in the battery cell 10. The first groove 61 may be formed in a variety of ways, such as stamping, milling, or the like. The first groove 61 may include at least one groove section. A cross section of the groove section may be in various shapes, such as a rectangle shape, a trapezoid shape, or the like. The cross section of the groove section is perpendicular to an extension direction of the groove section. The first groove 61 may be in various shapes. For example, the first groove 61 is a groove extending along an arc-shaped trajectory. For another example, the first groove 61 includes a plurality of groove sections, and the plurality of groove sections can form a U-shape, H-shape, V-shape, Y-shape, X-shape, etc.

The second groove 62 is a flipping groove formed in the pressure relief component 6. When the pressure relief component 6 is cracked along at least a part of the first groove 61, the second groove 62 can guide at least a part of the predetermined pressure relief region 63 to flip. In other words, the second groove 62 plays a role in helping the predetermined pressure relief region 63 to flip, making it easier for the predetermined pressure relief region 63 to flip toward the outside of the battery cell 10, thereby quickly opening the predetermined pressure relief region 63. The second groove 62 may guide the entire predetermined pressure relief region 63 to flip, or the second groove 62 may guide only a part of the predetermined pressure relief region 63 to flip. During the pressure relief process of the battery cell 10, the pressure relief component 6 can be split along at least a part of the first groove 61, and generally will not be split along the second groove 62. A minimum thickness of a residual portion of a region of the pressure relief component 6 provided with the first groove 61 may be less than a minimum thickness of a residual portion of a region of the pressure relief component 6 provided with the second groove 62, so that the region of the pressure relief component 6 provided with the first groove 61 is easier to crack than the region of the pressure relief component 6 provided with the second groove 62. The second groove 62 may be formed in a variety of ways, such as stamping, milling, or the like The second groove 62 may be in various shapes. For example, the second groove 62 is a groove extending along an arc-shaped trajectory. For another example, the second groove 62 is a groove extending along a linear trajectory. A cross section of the second groove 62 may be in various shapes, such as a rectangle shape, a trapezoid shape, or the like.

The second groove 62 not only has the function of facilitating flipping the predetermined pressure relief region 63, but also has a buffering function. The second groove 62 can absorb an excess material extruded when forming the first groove 61, thereby reducing the risk of the excess material extruded from the first groove 61 diffusing to a surface close to the shell 1 in the width direction Z of the second groove, and improving the flatness of the surface of the shell 1 in the width direction Z of the second groove. When the shell 1 of the battery cell 10 is subjected to internal and external impact forces and deforms in the width direction Z of the second groove, the second groove 62 can also absorb the deformation energy of the shell 1, thereby reducing the influence of the expansion and deformation of the battery cell 10 in the width direction Z of the second groove on the pressure relief component 6.

The second groove 62 and the first groove 61 may be directly connected, or the second groove 62 and the first groove 61 may not contact each other. The second groove 62 and the first groove 61 may be arranged in the same surface of the pressure relief component 6 in the thickness direction X of the first wall portion, or the second groove 62 and the first groove 61 may also be arranged in two opposite surfaces of the pressure relief component 6 in the thickness direction X of the first wall portion. If the second groove 62 is directly connected to the first groove 61, the second groove 62 and the first groove 61 may be arranged in the same surface of the pressure relief component 6. If the second groove 62 and the first groove 61 do not contact each other, in the thickness direction X of the first wall portion, a projection of the second groove 62 and a projection of the first groove 61 may partially overlap or may not overlap.

The predetermined pressure relief region 63 is a region of the pressure relief component 6 defined by the first groove 61. The number of the predetermined pressure relief region 63 defined by the first groove 61 may be one or more. The predetermined pressure relief region 63 can be opened when the pressure relief component 6 is split along the first groove 61. The predetermined pressure relief region 63 and the second groove 62 may correspond to each other one to one, that is, each predetermined pressure relief region 63 is arranged corresponding to one second groove 62. Alternatively, each predetermined pressure relief region 63 may be arranged corresponding to a plurality of second grooves 62. The predetermined pressure relief region 63 may be in the shape of a triangle, a rectangle, a trapezoid, a semicircle, or the like. In the embodiment shown in FIG. 5, there are two predetermined pressure relief regions 63, and two shaded portions shown in FIG. 5 are namely the two predetermined pressure relief regions 63.

One of the first surface 64 and the second surface 65 may be an outer surface of the pressure relief component 6, and the other may be an inner surface of the pressure relief component 6. The outer surface of the pressure relief component 6 faces the outside of the battery cell 10, and the inner surface of the pressure relief component 6 faces the inside of the battery cell 10. The first surface 64 and the second surface 65 may be planes. The first surface 64 and the second surface 65 may be arranged in parallel or at a non-zero angle. The second groove 62 is recessed from the first surface 64 toward the second surface 65. That is, the second groove 62 is arranged in the first surface 64. The first groove 61 may be arranged in the first surface 64 or in the second surface 65. As an example, in the embodiment shown in FIG. 7, the first surface 64 is an inner surface of the pressure relief component 6, the second surface 65 is an outer surface of the pressure relief component 6, and the first groove 61 is arranged in the second surface 65.

The first groove side surface 621 may be a plane or an arc-shaped surface. If the first groove side surface 621 is an arc-shaped surface, an angle between a connecting line of two ends of the first groove side surface 621 in a depth direction of the second groove 62 and the first surface 64 is the angle a between the first groove side surface 621 and the first surface 64. The second groove bottom surface 622 may be a plane or an arc-shaped surface. If the second groove side surface 622 is an arc-shaped surface, an angle between a connecting line of two ends of the second groove side surface 622 in the depth direction of the second groove 62 and the first surface 64 is the angle b between the second groove side surface 622 and the first surface 64. The first groove side surface 621 and the first surface 64 may be directly connected or indirectly connected. For example, the first groove side surface 621 and the first surface 64 are in smooth transition through an arc-shaped surface. The second groove side surface 622 and the first surface 64 may be directly connected or indirectly connected. For example, the second groove side surface 622 and the first surface 64 are in smooth transition through an arc-shaped surface. For example, in the embodiment shown in FIG. 7, the first surface 64, the first groove side surface 621, and the second groove side surface 622 are all planes.

The first groove side surface 621 and the first surface 64 may be arranged at an obtuse angle or a right angle, and the second groove side surface 622 and the first surface 64 may be arranged at an obtuse angle. As an example, b-a≥3°.

When measuring the angles a and b, the pressure relief component 6 may be cut in a direction perpendicular to an extension direction Y of the second groove, and then the angle between the first groove side surface 621 and the first surface 64 and the angle between the second groove side surface 622 and the first surface 64 can be measured on a cut surface through a measuring tool. The first groove side surface 621, the second groove side surface 622, and the first surface 64 can also be scanned and imaged on the cut surface by a CT scanning device, and then the angle between the first groove side surface 621 and the first surface 64 and the angle between the second groove side surface 622 and the first surface 64 can be measured.

As an example, in the embodiments shown in FIG. 4 to FIG. 7, the thickness direction X of the first wall portion is parallel to a first direction, a wall portion of the case 11 opposite to the end cover 12 serves as the pressure relief component 6, the first groove 61 and the second groove 62 are respectively arranged in two opposite surfaces of the first wall portion in the thickness direction X, the first groove 61 is H-shaped, the second groove 62 extends along a linear trajectory, the extension direction Y of the second groove is parallel to a second direction, the width direction Z of the second groove is parallel to a third direction, and the first direction, the second direction, and the third direction are perpendicular to each other. The first direction is a height direction of the battery cell 10, the second direction is a length direction of the battery cell 10, and the third direction is a thickness direction of the battery cell 10.

In the embodiment of the present application, the pressure relief component 6 is provided with the first groove 61, and the first groove 61 defines the at least one predetermined pressure relief region 63, so that the pressure relief component 6 can be split along at least a part of the first groove 61 when the battery cell 10 release pressure to open the predetermined pressure relief region 63 to release the internal pressure of the battery cell 10. The pressure relief component 6 is also provided with the second groove 62, which can guide at least a part of the predetermined pressure relief region 63 to flip, so as to open at least a part of the predetermined pressure relief region 63 for pressure relief. The second groove 62 plays an auxiliary role in the predetermined pressure relief region 63, making it easier to flip the predetermined pressure relief region 63, and reducing the difficulty of flipping the predetermined pressure relief region 63, so that the predetermined pressure relief region 63 can be opened more quickly during the process of the pressure relief component 6 splitting along the first groove 61, thereby improving the opening rate of the predetermined pressure relief region 63. In addition, since a<b is equivalent to reducing the angle formed between the first groove side surface 621 and the first surface 64, which can reduce the amount of an excess material extruded when forming the second groove 62 diffusing to the predetermined pressure relief region 63, thereby reducing the height of a material pile bulge formed when the excess material extruded from the region of the pressure relief component 6 provided with the second groove 62 is accumulated in the predetermined pressure relief region 63, improving the flatness of the surface of the predetermined pressure relief region 63, reducing the risk of the predetermined pressure relief region 63 being opened prematurely due to poor surface flatness, and prolonging the service life of the battery cell 10.

In some embodiments, 90°≤a≤150°.

In the present embodiment, a may be any value of 90°, 100°, 110°, 120°, 130°, 135°, 140°, and 150°, or a value in a range between any two of the values.

In the present embodiment, 90°≤a≤150° reduces the influence of the first groove side surface 621 on a forming tool, so that it is easier to take out the forming tool from the second groove 62, thereby reducing the forming difficulty of the second groove 62.

In some embodiments, 90°<b≤170°.

In the present embodiment, b may be any value of 91°, 95°, 100°, 105°, 110°, 115°, 120°, 125°, 130°, 135°, 140°, 145°, 150°, 155°, 160°, 165°, and 170°, or a value in a range between any two of the values.

In the present embodiment, 90°<b≤170° reduces the influence of the second groove side surface 622 on a forming tool, so that it is easier to take out the forming tool from the second groove 62, thereby reducing the forming difficulty of the second groove 62.

In some embodiments, please continue to refer to FIG. 8, and FIG. 8 is a partially enlarged view of part C in FIG. 7. The second groove 62 further includes a first groove bottom surface 625, the first groove bottom surface 625 is connected to the first groove side surface 621 and the second groove side surface 622, the second groove 62 forms a first notch 626 in the first surface 64, and in the width direction Z of the second groove, a width of the first groove bottom surface 625 is L₁, and a width of the first notch 626 is L₂, satisfying: L₁<L₂.

The first groove bottom surface 625a may be a plane or an arc-shaped surface. If the first groove bottom surface 625 is a plane, a connection position between the first groove bottom surface 625 and the first groove side surface 621 can form a rounded corner, and a connection position between the first groove bottom surface 625 and the second groove side surface 622 can form a rounded corner.

As an example, a width of the second groove 62 gradually decreases in a direction from the first notch 626 to the first groove bottom surface 625, the groove bottom surface (first groove bottom surface 625) of the second groove 62 is a plane parallel to the first surface 64, an angle formed between the groove bottom surface of the second groove 62 and the first groove side surface 621 is equal to the angle a formed between the first groove side surface 621 and the first surface 64, and an angle formed between the groove bottom surface of the second groove 62 and the second groove side surface 622 is equal to the angle b formed between the second groove side surface 622 and the first surface 64.

In the present embodiment, L₁<L₂, so that the second groove 62 is made into a structure with a wide top and a narrow bottom, which facilitates taking out the forming tool used for forming the second groove 62 from the second groove 62, thereby facilitating forming the second groove 62.

In some embodiments, 0.05 mm≤L₁≤0.3 mm;

L₁ may be any value of 0.05mm, 0.08mm, 0.1mm, 0.12mm, 0.15mm, 0.18mm, 0.2mm, 0.22mm, 0.25mm, 0.28mm, and 0.3mm, or a value in a range between any two of the values.

In the present embodiment, L₁≥0.05 mm, so that the groove bottom surface of the second groove 62 has a sufficient width, which reduces the difficulty of forming the second groove 62 on the one hand, and reduces the risk of insufficient strength of a residual portion of the second groove 62 due to stress concentration caused by a too small width of the groove bottom surface of the second groove 62 on the other hand. L₁≤0.3 mm, so that the groove bottom surface of the second groove 62 is not too wide, reducing the amount of an extruded material when forming the second groove 62, which is beneficial to improving the flatness of the predetermined pressure relief region 63.

In some embodiments, 0.4 mm≤L₂≤1.2 mm.

L₂ may be any value of 0.4mm, 0.5mm, 0.6mm, 0.7mm, 0.8mm, 0.9mm, 1mm, 1.1mm, and 1.2mm, or a value in a range between any two of the values.

In the present embodiment, L₂≥0.4 mm, so that the first notch 626 of the second groove 62 has a sufficient width, reducing the difficulty of forming the second groove 62 and enhancing the auxiliary flipping effect of the second groove 62 on the predetermined pressure relief region 63; L₂≤1.2 mm, so that the first notch 626 of the second groove 62 is not too wide, reducing the amount of the extruded material when forming the second groove 62, which is beneficial to improving the flatness of the surface of the predetermined pressure relief region 63.

In some embodiments, please continue to refer to FIG. 7 and FIG. 8, the minimum residual thickness of the first groove 61 is D₁, and a minimum residual thickness of the second groove 62 is D₂, satisfying: D₁<D₂.

The minimum residual thickness of the first groove 61 is the minimum thickness of the residual portion of the pressure relief component 6 after the first groove 61 is arranged, and the residual portion may be the groove bottom wall of the first groove 61. A thickness of the groove bottom wall of the first groove 61 may be uniform or non-uniform. If the thickness of the groove bottom wall of the first groove 61 is non-uniform, a thickness of a thinnest position of the groove bottom wall of the first groove 61 is the minimum residual thickness of the first groove 61. In the embodiment where the first groove 61 includes a plurality of groove sections, and if minimum residual thicknesses of all the groove sections are equal, the minimum residual thickness of any groove section is the minimum residual thickness of the first groove 61; if minimum residual thicknesses of at least two groove sections are unequal, the minimum residual thickness of the groove section with the smallest minimum residual thickness is the minimum residual thickness of the first groove 61. The minimum residual thickness of the groove section is the minimum thickness of the residual portion of the pressure relief component 6 after the groove section is arranged, and the residual portion may be the groove bottom wall of the groove section.

The minimum residual thickness of the second groove 62 is a minimum thickness of a residual portion of the pressure relief component 6 after the second groove 62 is arranged, and the residual portion may be the groove bottom wall of the second groove 62. A thickness of the groove bottom wall of the second groove 62 may be uniform or non-uniform. If the thickness of the groove bottom wall of the second groove 62 is non-uniform, a thickness of a thinnest position of the groove bottom wall of the second groove 62 is the minimum residual thickness of the second groove 62.

In the present embodiment, D₁<D₂, so that the strength of the region of the pressure relief component 6 provided with the first groove 61 is smaller than the strength of the region of the pressure relief component 6 provided with the second groove 62, and the pressure relief component 6 can be split preferentially along the first groove 61 to achieve rapid opening of the predetermined pressure relief region 63.

In some embodiments, in the thickness direction of the first wall portion 13, a maximum groove depth of the first groove 61 is H₁, and a maximum groove depth of the second groove 62 is H₂, satisfying: H₂<H₁.

A maximum distance between the notch of the first groove 61 and the groove bottom surface 614 of the first groove in the thickness direction X of the first wall portion is the maximum groove depth of the first groove 61; and a maximum distance between the notch (first notch 626) of the second groove 62 and the groove bottom surface (first groove bottom surface 625) of the second groove 62 in the thickness direction X of the first wall portion is the maximum groove depth of the second groove 62.

As an example, the first surface 64 is parallel to the second surface 65, a distance between the first surface 64 and the second surface 65 is D, a thickness of the pressure relief component 6 is D, and D=D₁+H₁=D₂+H₂.

In the present embodiment, H₂<H₁, during the production process, a depth of the first groove 61 may be machined greater than a depth of the second groove 62, so that the minimum residual thickness of the first groove 61 is smaller than the minimum residual thickness of the second groove 62.

In someembodiments, in the thickness direction X of the first wall portion, the maximum groove depth of the first groove 61 is H₁, the thickness of the pressure relief component 6 is D, and 0.16≤H₁/D<1.

H₁/D may be any value of 0.16, 0.18, 0.2, 0.22, 0.25, 0.28, 0.3, 0.32, 0.35, 0.38, 0.4, 0.42, 0.45, 0.48, 0.5, 0.62, 0.65, 0.68, 0.7, 0.72, 0.75, 0.78, 0.8, 0.82, 0.85, 0.88, 0.9, 0.92, 0.95, 0.98, and 0.99, or a value in a range between any two of the values.

It can be understood that if the pressure relief component 6 and the first wall portion 13 are formed integrally, the first wall portion 13 can serve as the pressure relief component 6, and the thickness of the pressure relief component 6 is the thickness of the first wall portion 13.

In the present embodiment, 0.16≤H₁/D<1, so that the proportion of the maximum depth of the first groove 61 in the thickness of the pressure relief component 6 is not too small, and the bursting pressure of the battery cell 10 is not too high, which is conducive to improving the timeliness of pressure relief of the battery cell 10.

In some embodiments, 0.4 mm≤H₁≤2 mm, and 0.8 mm≤D≤2.5 mm.

H₁ may be any value of 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, and 2 mm, or a value in a range between any two of the values.

D may be any value of 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, 2 mm, 2.05 mm, 2.1 mm, 2.15 mm, 2.2 mm, 2.25 mm, 2.3 mm, 2.35 mm, 2.4 mm, 2.45 mm, and 2.5 mm, or a value in a range between any two of the values.

In some embodiments, 0.3 mm≤D₂≤1.2 mm.

L₂ may be any value of 0.3 mm, 0.4 mm, 0.5 mm, 0.6 mm, 0.7 mm, 0.8 mm, 0.9 mm, 1 mm, 1.1 mm, and 1.2 mm, or a value in a range between any two of the values.

In the present embodiment, D₂≥0.3 mm, so that the residual portion of the second groove 62 has sufficient strength. In addition, since D₁<D₂ and D₂≥0.3 mm, a residual thickness of the first groove 61 does not need to be machined too small, which is beneficial to reducing the machining difficulty of the first groove 61 and improving the strength of a residual portion of the first groove 61 during normal use of the battery cell 10. D₂≤1.2 mm, so that a thickness of a residual thickness portion of the second groove 62 is not too large, thereby improving the auxiliary flipping effect of the second groove 62 on the predetermined pressure relief region 63.

In some embodiments, please continue to refer to FIG. 5, the pressure relief component 6 is provided with a plurality of second grooves 62, the first groove 61 defines a plurality of predetermined pressure relief regions 63, and each predetermined pressure relief region 63 is arranged corresponding to at least one second groove 62.

The number of the second grooves 62 may be two, three, four or more, and the number of the predetermined pressure relief regions 63 defined by the first grooves 61 may be two, three, four or more. Each predetermined pressure relief region 63 may be arranged corresponding to at least one second groove 62, that is, each predetermined pressure relief region 63 may be arranged corresponding to one second groove 62, or may be arranged corresponding to a plurality of second grooves 62.

In the present embodiment, a plurality of predetermined pressure relief regions 63 are defined by the first groove 61, when the battery cell 10 experiences thermal runaway, the plurality of predetermined pressure relief regions 63 can be all opened. When a total pressure relief area of the pressure relief component 6 is constant, the opening rate of the predetermined pressure relief region 63 can be increased, thereby achieving faster pressure relief.

In some embodiments, the numbers of the predetermined pressure relief regions 63 and the second grooves 62 are both two. The first groove 61 includes a first groove section 611. In the width direction Z of the second groove, the first groove section 611 is located between the two second grooves 62. The two predetermined pressure relief regions 63 are respectively located on both sides of the first groove section 611. The first groove side surface 621 is closer to the first groove section 611 than the second groove side surface 622.

It can be understood that the predetermined pressure relief region 63 corresponds to the second groove 62 one to one.

The first groove 61 may include a plurality of groove sections, and the first groove section 611 may be one of the plurality of groove sections. The first groove section 611 is a groove section in the first groove 61 that separates the two predetermined pressure relief regions 63.

The area of the two predetermined pressure relief regions 63 may be equal or unequal. The first groove section 611 and the second groove 62 are arranged in the width direction Z of the second groove. The second groove 62 and the first groove section 611 may be parallel, or an extension line of the second groove 62 may intersect with an extension line of the first groove section 611.

As an example, in the embodiment shown in FIG. 5, the plurality of groove sections of the first groove 61 form an H-shaped structure, the first groove section 611 and the second groove 62 both extend along a linear trajectory, the first groove section 611 is parallel to the second groove 62, the two second grooves 62 are equidistant from the first groove section 611, and two predetermined pressure relief regions 63 are symmetrically arranged on both sides of the first groove section 611, so that the areas of the two predetermined pressure relief regions 63 are equal.

In the present embodiment, the numbers of the predetermined pressure relief regions 63 and the second grooves 62 are both two, and the first groove section 611 of the first groove 61 is located between the two second grooves 62, so that the first groove section 611 of the first groove 61 is located between the two predetermined pressure relief regions 63. After the pressure relief component 6 is split along the first groove section 611, the two predetermined pressure relief regions 63 can be opened oppositely to relieve pressure when the battery cell 10 releases pressure, so that the two predetermined pressure relief regions 63 can be opened quickly, which is beneficial to improving the pressure relief rate of the battery cell 10.

In some embodiments, please continue to refer to FIG. 5, in the thickness direction X of the first wall portion, a projection of the second groove 62 does not overlap with a projection of the first groove 61.

It can be understood that in the thickness direction X of the first wall portion, the projection of the second groove 62 has no overlapping portion with the projection of the first groove 61.

In the thickness direction X of the first wall portion, a projection of an extension line of the second groove 62 may be connected to the projection of the first groove 61, or a projection of an extension line of the first groove 61 may be connected to the projection of the second groove 62, or the projection of the extension line of the first groove 61 may be connected to the projection of the extension line of the second groove 62.

The second groove 62 and the first groove 61 may be arranged in the same side of the pressure relief component 6 in the thickness direction X of the first wall portion, for example, the second groove 62 and the first groove 61 are both arranged in the first surface 64; the second groove 62 and the first groove 61 may also be arranged in different sides of the pressure relief component 6 in the thickness direction X of the first wall portion, for example, the first groove 61 is arranged in the second surface 65, and the second groove 62 is arranged in the first surface 64.

In the present embodiment, the projection of the second groove 62 in the thickness direction X of the first wall portion does not overlap with the projection of the first groove 61 in the thickness direction X of the first wall portion, which can reduce the mutual influence between the first groove 61 and the second groove 62 during machining and reduce the risk of the first groove 61 and the second groove 62 being connected to each other during machining.

In some embodiments, the second groove 62 and the first groove 61 are arranged spaced apart in the width direction Z of the second groove.

The second groove 62 and the first groove 61 are arranged spaced apart in the width direction Z of the second groove, that is, the projection of the second groove 62 in the thickness direction X of the first wall portion and the projection of the first groove 61 in the thickness direction X of the first wall portion are apart at a certain distance in the width direction Z of the second groove. In the present embodiment, the second groove 62 and the first groove 61 may be located on the same side of the pressure relief component 6 in the thickness direction X of the first wall portion, or may be located on opposite sides of the pressure relief component 6 in the thickness direction X of the first wall portion. It can be understood that the projection of the second groove 62 in the thickness direction X of the first wall portion and the projection of the first groove 61 in the thickness direction X of the first wall portion are arranged spaced apart in the width direction Z of the second groove.

As an example, in the embodiment shown in FIG. 6, the shell 1 also includes a second wall portion 14 and a third wall portion 15. In the width direction Z of the second groove, the second wall portion 14 and the third wall portion 15 are arranged opposite to each other, and the first wall portion 13 is connected to the first wall portion 13 and the third wall portion 15. The first wall portion 13 serves as the pressure relief component 6. The first wall portion 13 is provided with two second grooves 62. In the width direction Z of the second groove, one second groove 62 is located between the first groove 61 and the second wall portion 14, and the other second groove 62 is located between the first groove 61 and the third wall portion 15.

In the present embodiment, the second groove 62 and the first groove 61 are arranged spaced apart in the width direction Z of the second groove, it is possible to achieve that the projection of the second groove 62 in the thickness direction X of the first wall portion does not overlap with the projection of the first groove 61 in the thickness direction X of the first wall portion, which can reduce the mutual influence between the first groove 61 and the second groove 62 during machining on the one hand, reduce the residual stress influence between the region of the pressure relief component provided 6 with the first groove 61 and the region of the pressure relief component 6 provided with the second groove 62 on the other hand, and reduce the risk that when cracks generated by the pressure relief component 6 cracking along the first groove 61 diffuse to the second groove 62, the pressure relief component 6 is caused to crack along the second groove 62.

In the above embodiment, in the width direction Z of the second groove, the second groove 62 and the first groove 61 are arranged spaced apart, so that the projection of the first groove 61 in the thickness direction X of the first wall portion is not located in the predetermined pressure relief region 63. In other embodiments, the projection of the first groove 61 in the thickness direction X of the first wall portion may be partially or wholly located within the predetermined pressure relief region 63.

In some embodiments, please continue to refer to FIG. 5, in the thickness direction X of the first wall portion, two ends of the projection of the second groove 62 in the extension direction respectively extend beyond two ends of the projection of the first groove 61.

In the thickness direction X of the first wall portion, the projection of the second groove 62 has two opposite ends in the extension direction, namely a first end 623 and a second end 624. The two ends of the projection of the second groove 62 in the extension direction respectively extend beyond the two ends of the projection of the first groove 61, that is, the two ends of the projection of the first groove 61 are located between the first end 623 and the second end 624 in the extension direction of the projection of the second groove 62. An extension direction of the projection of the second groove 62 in the thickness direction X of the first wall portion is parallel to the extension direction Y of the second groove. As an example, in the extension direction Y of the second groove, a length of the second groove 62 is greater than a length of the first groove 61 (maximum span of the first groove 61 in the extension direction Y of the second groove).

In the present embodiment, in the thickness direction X of the first wall portion, two ends of the projection of the second groove 62 in the extension direction respectively extend beyond two ends of the projection of the first groove 61, so that the second groove 62 is longer, thereby enhancing the auxiliary flipping effect of the second groove 62 on the predetermined pressure relief region 63. In addition, this structure can also improve the separation effect of the second groove 62 on the surface (an outer surface of the second wall portion 14 or an outer surface of the third wall portion 15) of the battery cell 10 in the width direction Z of the second groove and the first groove 61, improve the absorption effect of the second groove 62 on the excess material extruded when forming the first groove 61, improve the flatness of the surface of the battery cell 10 in the width direction Z of the second groove, and improve the blocking effect of the second groove 62 on the deformation energy of the battery cell 10 when the battery cell 10 is subjected to internal and external impact forces, thereby reducing the influence of the expansion of the battery cell 10 on the pressure relief component 6.

In other embodiments, in the thickness direction X of the first wall portion, the projection of the second groove 62 may be located between the two ends of the projection of the first groove 61.

In some embodiments, please continue to refer to FIG. 7, the first groove 61 is recessed from the second surface 65 toward the first surface 64.

It can be understood that the first groove 61 is arranged in the second surface 65, and the second groove 62 is arranged in the first surface 64.

As an example, the first surface 64 is parallel to the second surface 65, a minimum distance between the groove bottom surface 614 of the first groove and the first surface 64 in the thickness direction X of the first wall portion is equal to the minimum residual thickness of the first groove 61, and the minimum distance between the groove bottom surface (first groove bottom surface 625) of the second groove 62 and the second surface 65 in the thickness direction X of the first wall portion is equal to the minimum residual thickness of the second groove 62. A maximum groove depth of the first groove 61 is equal to a maximum distance between the second surface 65 and the groove bottom surface 614 of the first groove in the thickness direction X of the first wall portion, and a maximum groove depth of the second groove 62 is equal to a maximum distance between the first surface 64 and the groove bottom surface of the second groove 62 in the thickness direction X of the first wall portion.

In the present embodiment, the first groove 61 is recessed from the second surface 65 toward the first surface 64, so that the first groove 61 and the second groove 62 are respectively located on both sides of the pressure relief component 6 in the thickness direction X of the first wall portion, so as to facilitate machining the first groove 61 and the second groove 62 in both sides of the pressure relief component 6, which is beneficial to reducing the mutual influence of the first groove 61 and the second groove 62 during machining.

In some embodiments, please continue to refer to FIG. 7, in the thickness direction Z of the second groove, projections of the first groove 61 and the second groove 62 at least partially overlap.

The projection of the first groove 61 in the width direction Z of the second groove and the projection of the second groove 62 in the width direction Z of the second groove may partially overlap or completely overlap. If the two projections completely overlap, a first protrusion may be arranged at a position of the second surface 65 corresponding to the second groove 62, so that the second groove 62 does not penetrate through the pressure relief component 6 in the thickness direction X of the first wall portion, and a second protrusion may be arranged at a position of the first surface 64 opposite to the first groove 61, so that the first groove 61 does not penetrate through the pressure relief component 6 in the thickness direction X of the first wall portion.

It can be understood that the projections of the first groove 61 and the second groove 62 in the width direction Z of the second groove have an overlapping region. It can also be understood that the projections of the groove wall surface (groove bottom surface and groove side surface) of the first groove 61 and the groove wall surface (groove bottom surface and groove side surface) of the second groove 62 in the width direction Z of the second groove at least partially overlap.

It should be noted that if the groove bottom surface 614 of the first groove and the groove bottom surface (first groove bottom surface 625) of the second groove 62 are exactly flush, the groove bottom surface 614 of the first groove and the groove bottom surface (first groove bottom surface 625) of the second groove 62 overlap in the width direction Z of the second groove, and an overlapping region is a line. In this case, the projections of the first groove 61 and the second groove 62 also partially overlap.

In the present embodiment, the projections of the first groove 61 and the second groove 62 at least partially overlap, so that the projections of the first groove 61 and the second groove 62 in the width direction Z of the second groove have an overlapping region, thereby, on the one hand, improving an absorption effect of the second groove 62 on the excess material extruded when forming the first groove 61, and reducing the risk that when the extruded excess material of the first groove 61 diffuses to the surface close to the shell 1 in the width direction Z of the second groove, the surface is caused to be uneven; on the other hand, improving an absorption effect of the second groove 62 on the deformation energy of the battery cell 10 when the battery cell 10 is subjected to internal and external forces and deforms in the width direction Z of the second groove, and reducing the influence of expansion and deformation of the battery cell 10 in the width direction Z of the second groove on the pressure relief component 6.

In some embodiments, in the thickness direction X of the first wall portion, the groove bottom surface (first groove bottom surface 625) of the second groove 62 is closer to the second surface 65 than the groove bottom surface 614 of the first groove.

It can be understood that, in the thickness direction X of the first wall portion, the groove bottom surface (first groove bottom surface 625) of the second groove 62 is located between the groove bottom surface 614 of the first groove and the second surface 65.

In the present embodiment, the groove bottom surface (the first groove bottom surface 625) of the second groove 62 is closer to the first surface 64 than the groove bottom surface 614 of the first groove. This structure is conducive to achieving that the projections of the second groove 62 and the first groove 61 in the width direction Z of the second groove have more overlapping regions, thereby further improving the absorption effect of the second groove 62 on the excess material extruded when forming the first groove 61, and further improving the absorption effect of the second groove 62 on the deformation energy of the battery cell 10 when the battery cell 10 is subjected to internal and external forces and deforms in the width direction Z of the second groove.

In some embodiments, in the thickness direction X of the first wall portion, a maximum groove depth of the second groove 62 is H₂, and a minimum residual thickness of the first groove 61 is D₁, satisfying: D₁<H₂.

As an example, the first surface 64 is parallel to the second surface 65, a notch (first notch 626) of the second groove 62 is located in the first surface 64, and a maximum distance between the notch (first notch 626) of the second groove 62 and the groove bottom surface (first groove bottom surface 625) of the second groove 62 in the thickness direction X of the first wall portion is a maximum groove depth of the second groove 62. In the thickness direction X of the first wall portion, the portion between the groove bottom surface 614 of the first groove and the first surface 64 is the residual portion of the first groove 61, and the minimum thickness of the residual portion is the minimum residual thickness of the first groove 61. The first surface 64 is a reference surface for measuring the maximum groove depth of the second groove 62 and the minimum residual thickness of the first groove 61.

In the present embodiment, D₁<H₂, this structure is conducive to achieving more overlapping regions between the projections of the second groove 62 and the first groove 61 in the width direction Z of the second groove, thereby further improving the absorption effect of the second groove 62 on the excess material extruded when forming the first groove 61, and further improving the absorption effect of the second groove 62 on the deformation energy of the battery cell 10 when the battery cell 10 is subjected to internal and external forces and deforms in the width direction Z of the second groove.

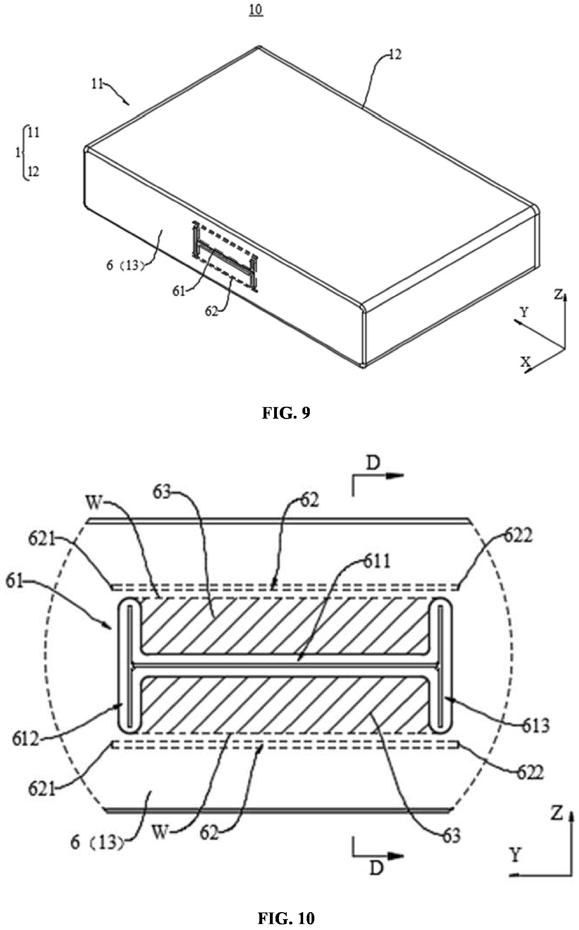

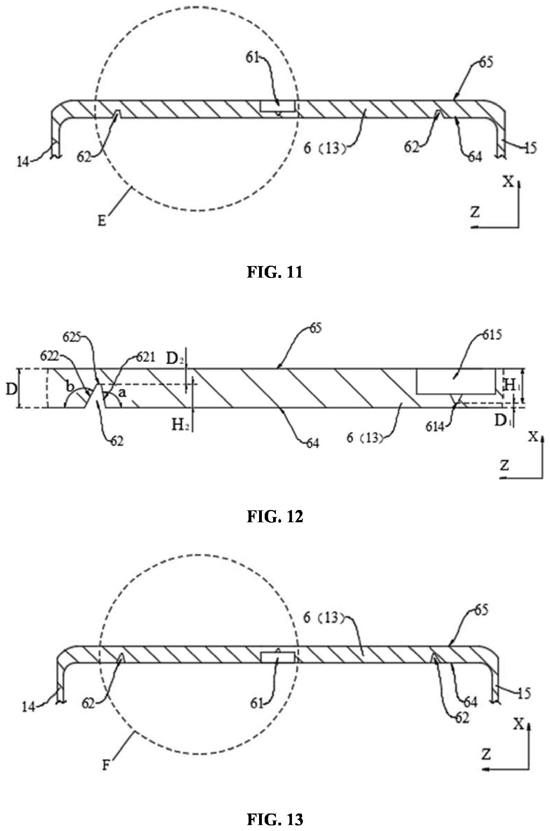

In some embodiments, please refer to FIG. 9 to FIG. 12, FIG. 9 is an assembly view of a battery cell 10 according to some other embodiments of the present application; FIG. 10 is a partial view of a shell 1 shown in FIG. 9; FIG. 11 is a D-D cross-sectional view of the shell 1 shown in FIG. 10; and FIG. 12 is a partially enlarged view of part E in FIG. 11. The first groove 61 includes multiple stages of grooves arranged in sequence in a direction from the second surface 65 to the first surface 64, and in the thickness direction X of the first wall portion, in adjacent two stages of grooves, one stage of groove away from the second surface 65 is arranged on a groove bottom surface of one stage of groove close to the second surface 65. One stage of groove, arranged on the second surface 65, in the multiple stages of grooves is a first-stage groove 615, and in the width direction Z of the second groove, projections of the second groove 62 and the first-stage groove 615 at least partially overlap.

The first groove 61 may be a two-stage groove, a three-stage groove, a four-stage groove, a five-stage groove, or the like. It can be understood that the first groove 61 is a stepped groove. In the direction from the second surface 65 to the first surface 64, a groove width of each stage of the groove gradually decreases. As shown in FIG. 12, taking the first groove 61 as a two-stage groove as an example, the two-stage groove includes the first-stage groove 615 and a second-stage groove. During machining, the first-stage groove 615 with a larger width can be machined in the second surface 65 first, and then the second-stage groove with a smaller width can be machined in a groove bottom surface of the first-stage groove 615.

The first-stage groove 615 is one stage of groove arranged in the second surface 65 in the first groove 61. in the embodiment where the first groove 61 includes a plurality of groove sections, it can be understood that each groove section is a multi-stage groove, and the one-stage groove with all the groove sections arranged in the second surface 65 constitutes the first-stage groove 615. In the multiple stages of grooves of the first groove 61, the groove bottom surface of one stage of groove farthest from the second surface 65 is the groove bottom surface 614 of the first groove, the minimum residual thickness of one stage of groove farthest from the second surface 65 is the minimum residual thickness of the first groove 61, and a maximum distance between the groove bottom surface of the one-stage groove farthest from the second surface 65 and the second surface 65 is equal to the maximum groove depth of the first groove 61.

A projection of the second groove 62 in the width direction Z of the second groove and a projection of the first-stage groove 615 in the width direction Z of the second groove may partially overlap or may completely overlap. If the two projections overlap completely, a first projection may be arranged at a position of the second surface 65 corresponding to the second groove 62, such that the second groove 62 does not penetrate through the pressure relief component 6 in the thickness direction X of the first wall portion, and a second projection may be arranged at a position of the first surface 64 corresponding to the first-stage groove 615, such that the first groove 61 does not penetrate through the pressure relief component 6 in the thickness direction X of the first wall portion.

It can be understood that both the projections of the second groove 62 and the first-stage groove 615 in the width direction Z of the second groove have an overlapping region. It can also be understood that projections of the groove wall surface (groove bottom surface and groove side surface) of the second groove 62 and the groove wall surface (groove bottom surface and groove side surface) of the first-stage groove 615 in the width direction Z of the second groove at least partially overlap.

In the present embodiment, by arranging the first groove 61 as the multiple stages of grooves arranged in the thickness direction X of the first wall portion, each stage of the groove can be machined one by one in the direction from the second surface 65 to the first surface 64 when forming the first groove 61, thereby reducing a forming depth of each stage of the groove, reducing a forming force borne by the pressure relief component 6 when forming the first groove 61, and reducing the risk of the pressure relief component 6 being damaged when forming the first groove 61. Since the projections of the first-stage groove 615 of the first groove 61 and the second groove 62 in the width direction Z of the second groove at least partially overlap, the projection of the second groove 62 in the width direction can cover the grooves of other stages in the first groove 61 except the first-stage groove 615, thereby, on the one hand, improving the absorption effect of the second groove 62 on the excess material extruded when forming the multiple stages of grooves during machining of the first groove 61, and on the other hand, further improving the absorption effect of the second groove 62 on the deformation energy of the battery cell 10 when the battery cell 10 is subjected to internal and external impact forces and deforms, thereby reducing the influence of the expansion and deformation of the battery cell 10 in the width direction Z of the second groove on the pressure relief component 6.

In some embodiments, in the thickness direction X of the first wall portion, the groove bottom surface (first groove bottom surface 625) of the second groove 62 is closer to the second surface 65 than the groove bottom surface of the first-stage groove 615.

It can be understood, in the thickness direction X of the first wall portion, the groove bottom surface (first groove bottom surface 625) of the second groove 62 is located between the groove bottom surface of the first-stage groove 615 and the second surface 65.

The groove bottom surface (first groove bottom surface 625) of the second groove 62 may be a plane or an arc-shaped surface; and the groove bottom surface of the first-stage groove 615 may be a plane or an arc-shaped surface. As an example, in the embodiment shown in FIG. 12, the groove bottom surface of the first-stage groove 615 and the groove bottom surface (first groove bottom surface 625) of the second groove 62 are both planes and parallel to the first surface 64 and the second surface 65.

In the present embodiment, the groove bottom surface (first groove bottom surface 625) of the second groove 62 is closer to the second surface 65 than the groove bottom surface of the first-stage groove 615, the projection of the second groove 62 in the width direction can cover more portions of the first-stage groove 615, thereby, on the one hand, further improving the absorption effect of the second groove 62 on the excess material extruded when forming the multiple stages of grooves during machining of the first groove 61, and on the other hand, further improving the absorption effect of the second groove 62 on the deformation energy of the battery cell 10 when the battery cell 10 is subjected to internal and external impact forces and deforms, thereby reducing the influence of the expansion and deformation of the battery cell 10 in the width direction Z of the second groove on the pressure relief component 6.

In some other embodiments, in the thickness direction X of the first wall portion, the groove bottom surface (first groove bottom surface 625) of the second groove 62 is flush with the groove bottom surface of the first-stage groove 615.

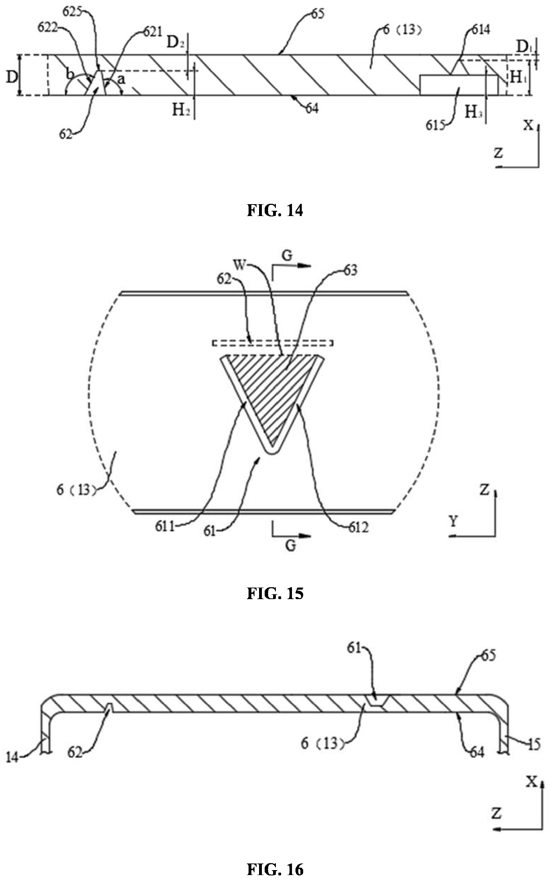

In some embodiments, please refer to FIG. 13 and FIG. 14, FIG. 13 is a partial cross-sectional view of a shell 1 according to some embodiments of the present application, and FIG. 14 is a partially enlarged view of part F in FIG. 13. The first groove 61 is recessed from the first surface 64 toward the second surface 65.

It can be understood that the first groove 61 and the second groove 62 are both arranged in the first surface 64.

In the present embodiment, the first groove 61 and the second groove 62 are arranged in the same side of the pressure relief component 6 in the thickness direction X of the first wall portion, which makes it easier to machine the first groove 61 and the second groove 62 in the pressure relief component 6. The first groove 61 and the second groove 62 can be machined without flipping the pressure relief component 6, which is beneficial to optimizing the production rhythm of the battery cell 10.

In some embodiments, please continue to refer to FIG. 14, the first groove 61 includes multiple stages of grooves arranged in sequence in a direction from the first surface 64 to the second surface 65, and in the thickness direction X of the first wall portion, in adjacent two stages of grooves, one stage of groove away from the first surface 64 is arranged in a groove bottom surface of one stage of groove close to the first surface 64. One stage of groove, arranged in the first surface 64, in the multiple stages of grooves is a first-stage groove 615, and in the thickness direction X of the first wall portion, a groove bottom surface of the first-stage groove 615 is closer to the first surface 64 than the groove bottom surface of the second groove 62.

The first-stage groove 615 is one stage of groove arranged in the first surface 64 in the first groove 61. In the multiple stages of grooves of the first groove 61, the groove bottom surface of the one-stage groove farthest from the first surface 64 is the groove bottom surface 614 of the first groove, the minimum residual thickness of the one-stage groove farthest from the first surface 64 is the minimum residual thickness of the first groove 61, and a maximum distance between the groove bottom surface of the one-stage groove farthest from the first surface 64 and the first surface 64 is equal to the maximum groove depth of the first groove 61. In the thickness direction X of the first wall portion, a minimum distance between the groove bottom surface (first groove bottom surface 625) of the second groove 62 and the second surface 65 is equal to the minimum residual thickness of the second groove 62, and a minimum distance between the groove bottom surface of the one-stage groove farthest away from the first surface 64 and the second surface 65 is equal to the minimum residual thickness of the first groove 61.

It can be understood that, in the thickness direction X of the first wall portion, the groove bottom surface of the first-stage groove 615 is located between the groove bottom surface 625 (first groove bottom surface 62) of the second groove and the first surface 64.

The groove bottom surface of the second groove 62 may be a plane or an arc-shaped surface; and the groove bottom surface of the first-stage groove 615 may be a plane or an arc-shaped surface. As an example, in the embodiment shown in FIG. 14, the groove bottom surface of the first-stage groove 615 and the groove bottom surface of the second groove 62 are both planes and parallel to the first surface 64 and the second surface 65.

In the present embodiment, by arranging the first groove 61 as the multiple stages of grooves arranged in the thickness direction X of the first wall portion, each stage of the groove can be machined one by one in the direction from the first surface 64 to the second surface 65 when forming the first groove 61, thereby reducing a forming depth of each stage of the groove, reducing a forming force borne by the pressure relief component 6 when forming the first groove 61, and reducing the risk of the pressure relief component 6 being damaged when forming the first groove 61. Since the bottom groove surface of the first-stage groove 615 is closer to the first surface 64 than the groove bottom surface of the second groove 62, the projection of the second groove 62 in the width direction at least covers the first-stage groove 615 of the first groove 61, so that the second groove 62 has a greater depth, the second groove 62 can have a good absorption effect on the excess material extruded when forming the first-stage groove 615, and the second groove 62 can have a good absorption effect on the deformation energy of the battery cell 10 when the battery cell 10 is subjected to internal and external impact forces and deforms.

In some embodiments, please continue to refer to FIG. 14, in the thickness direction X of the first wall portion, a maximum groove depth of the second groove 62 is H₂, and a maximum groove depth of the first-stage groove 615 is H₃, satisfying: H₃<H₂.

As an example, a maximum distance between the groove bottom surface (first groove bottom surface 625) of the second groove 62 and the first surface 64 in the thickness direction X of the first wall portion is the maximum groove depth of the second groove 62; and a maximum distance between the groove bottom surface of the first-stage groove 615 and the first surface 64 in the thickness direction X of the first wall portion is the maximum groove depth of the first-stage groove 615. The maximum groove depth of the second groove 62 is greater than the maximum groove depth of the first-stage groove 615, so that the groove bottom surface of the first-stage groove 615 is closer to the first surface 64 than the groove bottom surface (first groove bottom surface 625) of the second groove 62.

In the present embodiment, H₃<H₂, so that the second groove 62 has a greater depth, the second groove 62 can have a good absorption effect on the excess material extruded when forming the first-stage groove 615, and the second groove 62 can have a good absorption effect on the deformation energy of the battery cell 10 when the battery cell 10 is subjected to internal and external impact forces and deforms.

In some embodiments, please refer to FIG. 7, FIG. 12, and FIG. 14, the first surface 64 is a surface of the pressure relief component 6 facing an inside of the shell 1.

The first surface 64 is an outer surface of the pressure relief component 6, and the second surface 65 is an inner surface of the pressure relief component 6.

In the present embodiment, the first surface 64 is a surface of the pressure relief component 6 facing the inside of the shell 1, so that the second groove 62 is arranged inside the pressure relief component 6. On the one hand, when the predetermined pressure relief region 63 is flipped outward to open, the first groove side surface 621 and the second groove side surface 622 of the second groove 62 are not likely to abut against each other, which is beneficial to increasing the opening area of the predetermined pressure relief region 63. On the other hand, the second groove 62 is not exposed to an outside of the battery cell 10, thereby reducing the risk of oxidative corrosion of the pressure relief component 6 in a region of the second groove 62. In addition, when the first groove 61 is arranged in the first surface 64, the first surface 64 is a surface of the pressure relief component 6 facing the inside of the shell 1, so that the first groove 61 is arranged inside the pressure relief component 6, and the first groove 61 is not exposed to an outside of the battery cell 10, thereby reducing the risk of oxidative corrosion of the pressure relief component 6 in a region of the first groove 61.

In some other embodiments, the first surface 64 is a surface of the pressure relief component 6 facing an outside of the shell 1.

The first surface 64 is an outer surface of the pressure relief component 6, and the second surface 65 is an inner surface of the pressure relief component 6.

In the present embodiment, the first surface 64 is the surface of the pressure relief component 6 facing the outside of the shell 1, so that the second groove 62 is arranged outside the pressure relief component 6, which is convenient for machining and forming the second groove 62 outside the battery cell 10, and is conductive to reducing the difficulty of forming the second groove 62, so as to improve the production efficiency of the battery cell 10. Since the angle a formed between the first groove side surface 621 and the first surface 64 is less than the angle b formed between the second groove side surface 622 and the first surface 64, an angle between the first groove side surface 621 and the second groove side surface 622 is increased, thereby increasing an opening angle of the predetermined pressure relief region 63 when the predetermined pressure relief region 63 is flipped outward to make the first groove side surface 621 abut against the second groove side surface 622. In addition, when the first groove 61 is arranged in the first surface 64, the first surface 64 is a surface of the pressure relief component 6 facing the outside of the shell 1, so that the first groove 61 is arranged outside the pressure relief component 6, which is convenient for machining and forming the first groove 61 outside the battery cell 10, and is conducive to reducing the difficulty of forming the first groove 61, so as to improve the production efficiency of the battery cell 10.

In some embodiments, please refer to FIG. 15 and FIG. 16, FIG. 15 is a partial view of a shell 1 according to some other embodiments of the present application; and FIG. 16 is a G-G cross-sectional view of the shell 1 shown in FIG. 15. The first groove 61 includes a first groove section 611 and a second groove section 612, the first groove section 611 is connected to the second groove section 612, and the first groove section 611 and the second groove section 612 jointly define at least one predetermined pressure relief region 63.

The first groove section 611 and the second groove section 612 are two groove sections in the first groove 61. The first groove section 611 and the second groove section 612 may jointly define one or more predetermined pressure relief regions 63. The first groove section 611 and the second groove section 612 can be linear grooves extending along a linear trajectory, and can also be nonlinear grooves extending along a nonlinear trajectory, such as arc-shaped grooves extending along an arc-shaped trajectory. If the first groove section 611 and the second groove section 612 both extend along a linear trajectory, the first groove section 611 and the second groove section 612 may be arranged at an acute angle, a right angle, or an obtuse angle. The first groove section 611 and the second groove section 612 may be connected at ends to form structures in a V shape, an L shape or the like. The first groove section 611 and the second groove section 612 may define one predetermined pressure relief region 63. The first groove section 611 and the second groove section 612 may also be arranged in a crossed mode to form a structure in an X shape, an L shape or the like. The first groove section 611 and the second groove section 612 may define four predetermined pressure relief regions 63.

As an example, in the embodiments shown in FIG. 15 and FIG. 16, the first groove section 611 is connected to the second groove section 612 to form a V-shaped structure, and the first groove section 611 and the second groove section 612 define one predetermined pressure relief region 63. The first groove 61 is arranged in the second surface 65, the second groove 62 is arranged in the first surface 64, and a connecting line between an end of the first groove section 611 away from the second groove section 612 and an end of the second groove section 612 away from the first groove section 611 within the second surface 65 is a first connecting line W. The first connecting line W, the second groove section 612, and the second groove section 612 are connected end to end to define the predetermined pressure relief region 63. In FIG. 15, a triangular shaded portion is the predetermined pressure relief region 63.

It should be noted that in the embodiment where the first groove 61 is a multi-stage groove structure, both the first groove section 611 and the second groove section 612 are multi-stage groove structures.

In the present embodiment, at least one predetermined pressure relief region 63 is defined by the first groove section 611 and the second groove section 612 together. The first groove 61 of this structure is simple in structure, the stress at the position where the first groove section 611 is connected to the second groove section 612 is more concentrated and thus the position is weaker, so that when the battery cell 10 experiences thermal runaway, the pressure relief component 6 can be quickly split from the first groove section 611 and the second groove section 612 after the position where the first groove section 611 is connected to the second groove section 612 is split, and the predetermined pressure relief region 63 is opened more quickly to release pressure in time.

In some embodiments, please continue to refer to FIG. 10 and FIG. 11, the first groove 61 includes a first groove section 611, a second groove section 612, and a third groove section 613, the second groove section 612 and the third groove section 613 are arranged opposite to each other, the first groove section 611 and the second groove 62 are arranged opposite to each other, the first groove section 611 is connected to the second groove section 612 and the third groove section 613, in the width direction Z of the second groove, the first groove section 611 and the second groove 62 are arranged spaced apart, and the first groove section 611, the second groove section 612, and the third groove section 613 jointly define at least one predetermined pressure relief region 63.

The first groove section 611, the second groove section 612, and the third groove section 613 can jointly define one predetermined pressure relief region 63 or a plurality of predetermined pressure relief regions 63. The first groove section 611, the second groove section 612, and the third groove section 613 are three groove sections in the first groove 61. The first groove section 611, the second groove section 612, and the third groove section 613 can be linear grooves extending along a linear trajectory, or can be non-linear grooves extending along a non-linear trajectory, such as arc-shaped grooves extending along an arc-shaped trajectory. If the first groove section 611, the second groove section 612, and the third groove section 613 all extend along a linear trajectory, the first groove section 611 and the second groove section 612 may be arranged at an acute angle, a right angle, or an obtuse angle, the first groove section 611 and the second groove section 612 may be arranged at an acute angle, a right angle, or an obtuse angle, the second groove section 612 and the third groove section 613 may be arranged in parallel, or an extension line of the second groove section 612 may intersect with an extension line of the third groove section 613.

The first groove section 611 is connected to the second groove section 612 and the third groove section 613, that is, two ends of the first groove section 611 are respectively connected to the second groove section 612 and the third groove section 613, or at least one of the second groove section 612 and the third groove section 613 is connected to a position deviating from an end of the first groove section 611, so that at least one of the second groove section 612 and the third groove section 613 is located between two ends of the first groove section 611. The position where the second groove section 612 is connected to the first groove section 611 may be located at one end of the second groove section 612 or between the two ends of the second groove section 612. The position where the third groove section 613 is connected to the first groove section 611 may be located at one end of the third groove section 613 or between the two ends of the third groove section 613. The first groove section 611, the second groove section 612, and the third groove section 613 may form structures in a U shape, an N shape, an H shape, and the like. If the first groove section 611, the second groove section 612, and the third groove section 613 form a U-shaped structure, the first groove section 611, the second groove section 612, and the third groove section 613 jointly define a predetermined pressure relief region 63; if the first groove section 611, the second groove section 612, and the third groove section 613 form an N-shaped or H-shaped structure, the first groove section 611, the second groove section 612, and the third groove section 613 jointly define two predetermined pressure relief regions 63.

As an example, in the embodiments shown in FIG. 10 and FIG. 11, the first groove section 611, the second groove section 612, and the third groove section 613 form an H-shaped structure, there are two predetermined pressure relief regions 63, the first groove 61 is arranged in the second surface 65, the second groove 62 is arranged in the first surface 64, a connecting line between one end of the second groove section 612 and one end of the third groove section 613 in the second surface 65 forms a first connecting line W, and a connecting line between the other end of the second groove section 612 and the other end of the third groove section 613 in the second surface 65 forms another first connecting line W. The first groove section 611 is located between the two first connecting lines W, a part of the second groove section 612, the first groove section 611, a part of the third groove section 613, and one first connecting line W are connected end to end to define one predetermined pressure relief region 63, another part of the second groove section 612, the first groove section 611, another part of the third groove section 613, and another first connecting line W are connected end to end to define another predetermined pressure relief region 63, and two shaded portions shown in FIG. 10 are the two predetermined pressure relief regions 63.

In the present embodiment, the first groove section 611 is connected to the second groove section 612 and the third groove section 613, so that an intersection position of the first groove section 611 and the second groove section 612 and a connection position between the first groove section 611 and the third groove section 613 are weaker and easier to crack, and the predetermined pressure relief region 63 can be opened for pressure relief. The second groove section 612 is arranged opposite to the third groove section 613, and the first groove section 611 and the second groove 62 are arranged spaced apart in the width direction Z of the second groove. The first groove section 611, the second groove section 612, and the third groove section 613 jointly define at least one predetermined pressure relief region 63, which can further increase the opening area of the predetermined pressure relief region 63, thereby increasing the pressure relief area of the battery cell 10 and improving the pressure relief rate of the battery cell 10.

In some embodiments, a connection position between the second groove section 612 and the first groove section 611 deviates from the two ends of the second groove section 612, and a connection position between the third groove section 613 and the first groove section 611 deviates from two ends of the third groove section 613, so that predetermined pressure relief regions 63 are formed on both sides of the first groove section 611.

The connection position between the second groove section 612 and the first groove section 611 deviates from the two ends of the second groove section 612, that is, the connection position between the second groove section 612 and the first groove section 611 is not located at any one of the two ends of the second groove section 612, and in an extension direction of the second groove section 612, the connection position between the second groove section 612 and the first groove section 611 is located between the two ends of the second groove section 612. The connection position between the second groove section 612 and the first groove section 611 may be at a midpoint position of the second groove section 612 and may also deviate from the midpoint position of the second groove section 612.

The connection position between the third groove section 613 and the first groove section 611 deviates from the two ends of the third groove section 613, namely, the connection position between the third groove section 613 and the first groove section 611 is not located at any one of the two ends of the third groove section 613, and in an extension direction of the third groove section 613, the connection position between the third groove section 613 and the first groove section 611 is between the two ends of the third groove section 613. The connection position between the third groove section 613 and the first groove section 611 may be at a midpoint position of the third groove section 613, or may deviate from the midpoint position of the third groove section 613.

It should be noted that in the embodiment where the first groove 61 is a multi-stage groove structure, the first groove section 611, the second groove section 612, and the third groove section 613 are all multi-stage groove structures.

In the present embodiment, the connection position between the second groove section 612 and the first groove section 611 deviates from the two ends of the second groove section 612, and the connection position between the third groove section 613 and the first groove section 611 deviates from the two ends of the third groove section 613, so that the first groove section 611 of the first groove 61 is located between the two predetermined pressure relief regions 63. After the pressure relief component 6 is split along the first groove section 611, the two predetermined pressure relief regions 63 can be opened oppositely to relieve pressure when the battery cell 10 releases pressure, so that the two predetermined pressure relief regions 63 can be opened quickly, which is beneficial to improving the pressure relief rate of the battery cell 10.

In some embodiments, the first groove section 611 extends along a linear or arc-shaped trajectory; and/or, the second groove section 612 extends along a linear or arc-shaped trajectory; and/or, the third groove section 613 extends along a linear or arc-shaped trajectory. If the first groove section 611 extends along a linear trajectory, the first groove section 611 is a linear groove, which can reduce the difficulty of forming the first groove section 611.

As an example, in the embodiment shown in FIG. 10, the first groove section 611, the second groove section 612, and the third groove section 613 all extend along a linear trajectory, so that both the second groove section 612 and the third groove section 613 are perpendicular to the first groove section 611.

If the first groove section 611 extends along an arc-shaped trajectory, the first groove section 611 is an arc-shaped groove, and the pressure relief component 6 is more likely to split along the first groove section 611 when the battery cell 10 releases pressure, thereby achieving faster opening of the predetermined pressure relief region 63. If the second groove section 612 extends along a linear trajectory, the second groove section 612 is a linear groove, which can reduce the difficulty of forming the second groove section 612. If the second groove section 612 extends along an arc-shaped trajectory, the second groove section 612 is an arc-shaped groove, and the pressure relief component 6 is more likely to split along the second groove section 612 when the battery cell 10 releases pressure, thereby achieving faster opening of the predetermined pressure relief region 63. If the third groove section 613 extends along a linear trajectory, the third groove section 613 is a linear groove, which can reduce the difficulty of forming the third groove section 613. If the third groove section 613 extends along an arc-shaped trajectory, the third groove section 613 is an arc-shaped groove, and the pressure relief component 6 is more likely to split along the third groove section 613 when the battery cell 10 releases pressure, thereby achieving faster opening of the predetermined pressure relief region 63.

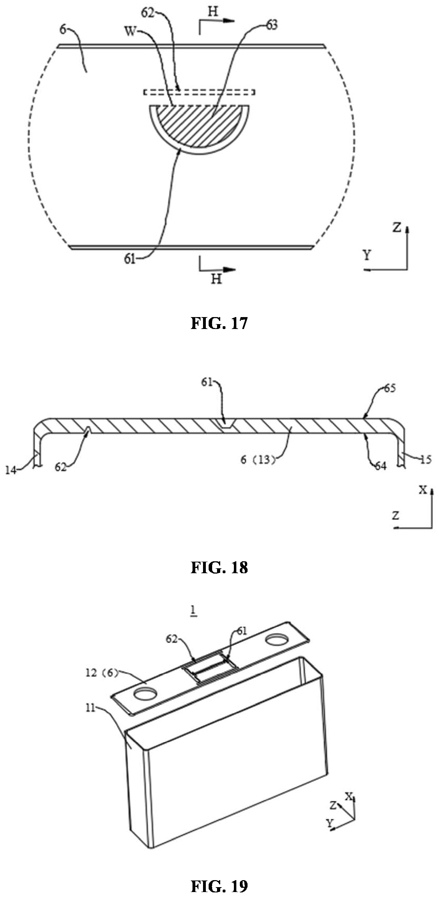

In some embodiments, please refer to FIG. 17 and FIG. 18, FIG. 17 is a partial view of a shell 1 according to still some other embodiments of the present application; and FIG. 18 is an H-H cross-sectional view of the shell 1 shown in FIG. 17. The first groove 61 extends along an arc-shaped trajectory.

A central angle of the first groove 61 may be less than 15°, 30°, 45°, 60°, 90°, 120°, 150°, 180°, 210°, 240°, 270°, 300°, 330°, or the like.

As an example, in the embodiments shown in FIG. 17 and FIG. 18, the first groove 61 is arranged In the second surface 65, the second groove 62 is arranged In the first surface 64, and a connecting line between both ends of the first groove 61 forms a first connecting line W. The first groove 61 and the first connecting line W are connected end to end to define one predetermined pressure relief region 63.

In the present embodiment, the first groove 61 extends along an arc-shaped groove, and the first groove 61 is an arc-shaped groove. The first groove 61 of this structure includes only one groove section, which simplifies the structure of the first groove 61.

In some embodiments, please refer to FIG. 10, FIG. 15, and FIG. 17, the second groove 62 extends along a linear trajectory. The second groove 62 is a linear groove, with a simple structure, thereby facilitating machining and shaping.

In some embodiments, please refer to FIG. 19, and FIG. 19 is an exploded view of a shell 1 (an opening is formed in one end of a case 11, and an end cover 12 serves as a pressure relief component 6) according to some embodiments of the present application The pressure relief component 6 and the first wall portion 13 are integrally formed.

It can be understood that a part of the first wall portion 13 may serve as the pressure relief component 6; or the entire first wall portion 13 may serve as the pressure relief component 6, that is, the first wall portion 13 and the pressure relief component 6 are the same component. The first groove 61 and the second groove 62 are both arranged in the first wall portion 13. The thickness direction X of the first wall portion is the thickness direction of the pressure relief component 6, and one of the first surface 64 and the second surface 65 of the pressure relief component 6 is an inner surface of the first wall portion 13 and the other one is an outer surface of the first wall portion 13.

In the present embodiment, the pressure relief component 6 and the first wall portion 13 are integrally formed, so that the first groove 61 and the second groove 62 can be directly formed in the first wall portion 13 to form an integrated pressure relief structure, the reliability is improved, the process of mounting the pressure relief component 6 is omitted, and the economical efficiency is higher.

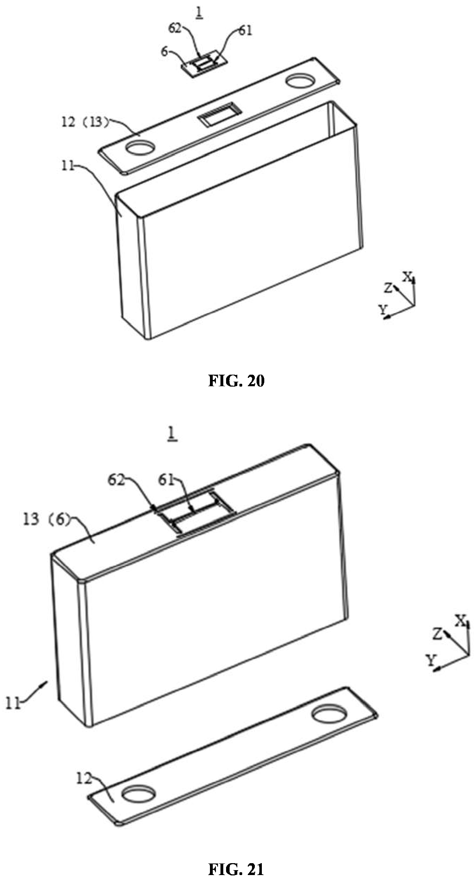

In some embodiments, please refer to FIG. 20, and FIG. 20 is an exploded view of a shell 1 (an opening is formed in one end of a case 11, an end cover 12 serves as a first wall portion 13, and a pressure relief component 6 is mounted on the first wall portion 13) according to some embodiments of the present application. The pressure relief component 6 and the first wall portion 13 are separably arranged, and the pressure relief component 6 is mounted on the first wall portion 13.

The pressure relief component 6 and the shell 1 are two independent components, and the pressure relief component 6 may be independently produced and then mounted on the first wall portion 13. The pressure relief component 6 may be mounted on the first wall portion 13 in a welding mode, a riveting mode, a bonding mode and the like. As an example, the first wall portion 13 is provided with a pressure relief hole 131, the pressure relief component 6 covers the pressure relief hole 131, and the pressure relief component 6 is welded to the first wall portion 13.

In the present embodiment, the pressure relief component 6 is a component independent of the shell 1. The pressure relief component 6 and the shell 1 may be separately produced and then assembled, such that the production difficulty is low and the efficiency is high.

In some embodiments, the first groove 61 is formed in the pressure relief component 6 by stamping.

It can be understood that the first groove 61 is formed in the pressure relief component 6 in a stamping mode. If the first groove 61 is one stage of groove structure, when forming the first groove 61 in the pressure relief component 6, the first wall portion 13 may be stamped once to form the first groove 61 in the pressure relief component 6; if the first groove 61 is a multi-stage groove structure, when forming the first groove 61 in the pressure relief component 6, the pressure relief component 6 can be stamped multiple times to form one stage of groove each time, and the first groove 61 is finally formed after stamping multiple times. It can be understood that, in the embodiment where the pressure relief component 6 and the first wall portion 13 are integrally formed, the first groove 61 is formed in the first wall portion 13 by stamping.

In the present embodiment, the first groove 61 is formed in the pressure relief component 6 by stamping. A forming method of the first groove 61 is simple, which is conductive to reducing the production costs of the battery cell 10.

In some embodiments, the second groove 62 is formed in the pressure relief component 6 by stamping.

It can be understood that the second groove 62 is formed in the pressure relief component 6 in a stamping mode. It can be understood that, in the embodiment where the pressure relief component 6 and the first wall portion 13 are integrally formed, the second groove 62 is formed in the first wall portion 13 by stamping.

In the present embodiment, the second groove 62 is formed in the pressure relief component 6 by stamping. A forming method of the second groove 62 is simple, which is conductive to reducing the production costs of the battery cell 10.

In some embodiments, the first wall portion 13 is a rectangular wall portion, and the first groove 61 and the second groove 62 are arranged in the width direction of the first wall portion 13.

The shell 1 may be in a cuboid shape, and the first wall portion 13 may be any rectangular wall portion of the shell 1. The first wall portion 13 is a rectangular wall portion, that is, when viewed in the thickness direction X of the first wall portion, the first wall portion 13 is substantially in a rectangle shape. A length of the first wall portion 13 is greater than a width of the first wall portion 13.

The first groove 61 and the second groove 62 are arranged in the width direction of the first wall portion 13. The first groove 61 and the second groove 62 may be arranged spaced apart in the width direction of the first wall portion 13, or the projection of the first groove 61 in the thickness direction X of the first wall portion and the projection of the second groove 62 in the thickness direction X of the first wall portion may be just connected in the width direction of the first wall portion 13. Taking the first groove 61 in an H shape as an example, the second groove section 612 and the third groove section 613 of the first groove 61 may both be apart at a certain distance from the second groove 62 in the width direction of the first wall portion 13, so that the first groove 61 and the second groove 62 are arranged spaced apart in the width direction of the first wall portion 13. Alternatively, the projection of at least one of the second groove section 612 and the third groove section 613 of the first groove 61 in the thickness direction X of the first wall portion at one end of the extension direction just extends in the width direction of the first wall portion 13 to the projection of the second groove 62 in the thickness direction X of the first wall portion, so that the projection of the first groove 61 in the thickness direction X of the first wall portion and the projection of the second groove 62 in the thickness direction X of the first wall portion are just connected in the width direction of the first wall portion 13.

As an example, the width direction of the first wall portion 13 is parallel to the width direction Z of the second groove.

In the present embodiment, the first groove 61 and the second groove 62 are arranged in the width direction of the first wall portion 13, so that the second groove 62 is closer to an edge of the first wall portion 13 in the width direction of the first wall portion 13, and the region of the pressure relief component 6 provided with the second groove 62 has higher strength, thereby reducing the risk of the pressure relief component 6 cracking along the second groove 62 when the battery cell 10 releases pressure. In addition, during normal use of the battery cell 10, the amount of expansion of the battery cell 10 in the width direction of the first wall portion 13 is greater than the amount of expansion thereof in the length direction of the first wall portion 13, and the expansion of the battery cell 10 in the width direction of the first wall portion 13 has a greater influence on the pressure relief component 6. The first groove 61 and the second groove 62 are arranged in the width direction of the first wall portion 13, and the second groove 62 can have a very good adsorption effect on the deformation energy of the battery cell 10 when the battery cell 10 expands and deforms in the width direction of the first wall portion 13, thereby reducing the influence of the expansion of the battery cell 10 in the width direction of the first wall portion 13 on the pressure relief component 6.

In some embodiments, please continue to refer to FIG. 19 and FIG. 20, the shell 1 includes a case 11 and an end cover 12, an opening is formed in at least one end of the case 11, the end cover 12 corresponds to the opening one to one, and the end cover 12 seals the opening. The at least one end cover 12 serves as the first wall portion 13.

The case 11 may have only one opening, for example, an opening is formed only in one end of the case 11; the case 11 may also have a plurality of openings, for example, openings are formed in opposite ends of the case 11. The number of the end cover 12 is the same as the number of the opening of the case 11. It can be understood that if the case 11 has only one opening, there is only one end cover 12, and the end cover 12 serves as the first wall portion 13; and if the case 11 has two openings, there are two end covers 12, and one end cover 12 may serve as the first wall portion 13, or both the two end covers 12 may serve as the first wall portion 13.

In the embodiment where an opening is formed in one end of the case 11, a positive electrode terminal and a negative electrode terminal may be arranged on the end cover 12, and a positive tab and a negative tab may be formed at an end of the electrode assembly 2 facing the end cover 12 to facilitate electrical connection of the positive tab and the negative tab with the positive electrode terminal and the negative electrode terminal, respectively. In the embodiment where openings are formed in opposite ends of the case 11, a positive electrode terminal may be arranged on one end cover 12, a negative electrode terminal may be arranged on the other end cover 12, and a positive tab and a negative tab may be respectively formed at opposite ends of the electrode assembly 2 to facilitate electrical connection between the positive tab and the positive electrode terminal and electrical connection between the negative tab and the negative electrode terminal.

In the embodiment shown in FIG. 19, an opening is formed in one end of the case 11, the end cover 12 serves as the first wall portion 13 (not shown in FIG. 19 ), and the first wall portion 13 serves as the pressure relief component 6. In the embodiment shown in FIG. 20, an opening is formed in one end of the case 11, the end cover 12 serves as the first wall portion 13, and the pressure relief component 6 is mounted on the first wall portion 13.

In the present embodiment, at least one end cover 12 in the case 11 serves as the first wall portion 13, so that the at least one end cover 12 has a pressure relief function, and the difficulty of forming the first groove 61 and the second groove 62 in the end cover 12 or mounting the pressure relief component 6 is reduced.

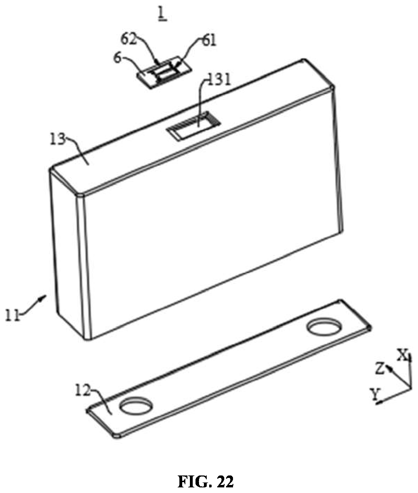

In some embodiments, please refer to FIG. 21 and FIG. 22, FIG. 21 is an exploded view of a shell 1 (an opening is formed in one end of a case 11, the case 11 includes a first wall portion 13, and a pressure relief component 6 serves as the first wall portion 13) according to some embodiments of the present application; and FIG. 22 is an exploded view of a shell 1 (an opening is formed in one end of a case 11, the case 11 includes a first wall portion 13, and a pressure relief component 6 is mounted on the first wall portion 13) according to some embodiments of the present application. The shell 1 includes the case 11 and an end cover 12, an opening is formed in at least one end of the case 11, the end cover 12 corresponds to the opening one to one, and the end cover 12 seals the opening. At least one wall portion of the case 11 serves as the first wall portion 13.

The case 11 may have only one opening, for example, an opening is formed only in one end of the case 11; the case 11 may also have a plurality of openings, for example, openings are formed in opposite ends of the case 11. The number of the end cover 12 is the same as the number of the opening of the case 11. It can be understood that if the case 11 has only one opening, there is one end cover 12; and if the case 11 has two openings, there are two end covers 12. In the embodiment where an opening is formed in one end of the case 11, a positive electrode terminal and a negative electrode terminal may be arranged on the end cover 12, and a positive tab and a negative tab may be formed at an end of the electrode assembly 2 facing the end cover 12 to facilitate electrical connection of the positive tab and the negative tab with the positive electrode terminal and the negative electrode terminal, respectively. In the embodiment where openings are formed in opposite ends of the case 11, a positive electrode terminal may be arranged on one end cover 12, a negative electrode terminal may be arranged on the other end cover 12, and a positive tab and a negative tab may be respectively formed at opposite ends of the electrode assembly 2 to facilitate electrical connection between the positive tab and the positive electrode terminal and electrical connection between the negative tab and the negative electrode terminal. In the case 11, it may be that one wall portion serves as the first wall portion 13, or a plurality of wall portions serve as the first wall portion 13.

In the present embodiment, at least one wall portion of the case 11 serves as the first wall portion 13, so that the case 11 has a pressure relief function, and during pressure relief of the battery cell 10, emissions discharged from the inside of the battery cell 10 do not easily influence external components outside the end cover 12, so that the risk of the external components being damaged by the emissions is reduced. The external component may be a bus component, a temperature detection component, a voltage detection component, or the like, which is connected to the electrode terminal. The emissions include, but are not limited to, an electrolyte, dissolved or split positive and negative electrode plates, fragments of the spacer, high temperature and high pressure gas generated by reactions, and the like.

In some embodiments, please continue to refer to FIG. 21 and FIG. 22, an opening is formed only in one end of the case 11, and a wall portion of the case 11 arranged opposite to the end cover 12 serves as the first wall portion 13.

As an example, the case 11 is in a cuboid shape, and the case 11 further includes four side walls, which are arranged around the first wall portion 13 in a defining mode. The four side walls and the first wall portion 13 jointly define a space inside the case 11. In the embodiment shown in FIG. 21, an opening is formed in one end of the case 11, a wall portion of the case 11 opposite to the end cover 12 serves as the first wall portion 13, and the pressure relief component 6 serves as the first wall portion 13. In the embodiment shown in FIG. 22, an opening is formed in one end of the case 11, a wall portion of the case 11 opposite to the end cover 12 serves as the first wall portion 13, and the pressure relief component 6 is mounted on the first wall portion 13.

In the present embodiment, the case 11 is a structure with an opening formed in one end, which makes the structure of the whole battery cell 10 simpler. The first wall portion 13 is a wall portion of the case 11 opposite to the end cover 12, which can realize directional pressure relief from the bottom of the case 11.

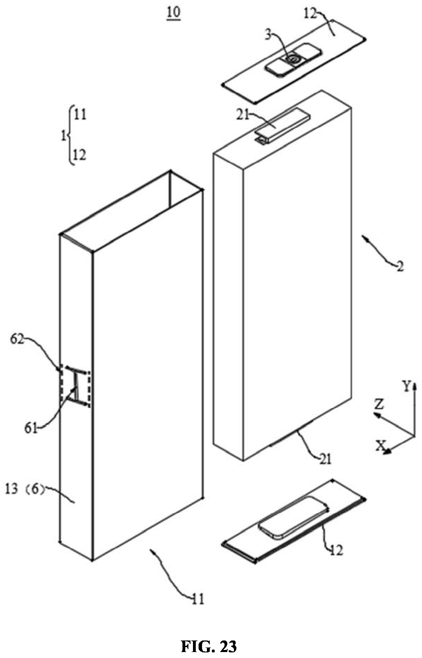

In some embodiments, please refer to FIG. 23, and FIG. 23 is an exploded view of a battery cell 10 according to some other embodiments of the present application. Openings are formed in opposite ends of the case 11, and at least one wall portion of the case 11 serves as the first wall portion 13.

In the case 11, it may be that one wall portion serves as the first wall portion 13, or a plurality of wall portions serve as the first wall portion 13. The pressure relief component 6 may serve as the first wall portion 13, and the pressure relief component 6 may also be mounted on the first wall portion 13.

As an example, the case 11 is in a cuboid shape, and the case 11 includes four wall portions, which are connected end to end in sequence and jointly define a space inside the case 11. In the four wall portions, two opposite wall portions are large-area wall portions, and the other two wall portions are small-area wall portions. An area of an outer surface of the large-area wall portion is greater than an area of an outer surface of the small-area wall portion. One or two small-area wall portions in the case 11 are the first wall portion13.

In the present embodiment, the case 11 is of a structure with openings formed in opposite ends, and an electrode assembly 2 can be assembled into the case 11 through any opening, which can reduce the difficulty of assembling the battery cell 10 and improve the assembly quality of the battery cell 10. The case 11 of this structure can be made longer (openings are formed in both ends of the case 11 in a length direction), which is beneficial to increasing the electric capacity of the battery cell 10.

In some embodiments, a material of the pressure relief component 6 includes a steel material.

The steel material may be carbon steel, alloy steel, stainless steel, etc.

It can be understood that, in the embodiment where the pressure relief component 6 and the first wall portion 13 are integrally formed, a material of the first wall portion 13 includes a steel material. If the first wall portion 13 is an end cover 12, the end cover 12 may be made of a steel material; and if the first wall portion 13 is the wall portion of the case 11, the case 11 may be made of a steel material.

In the present embodiment, the steel material has the characteristic of high strength, and the pressure relief component 6 made of the steel material has better strength. When the bursting pressure of the battery cell 10 is constant, the pressure relief component 6 may be made thinner to reduce the volume of the pressure relief component 6. In the embodiment where the pressure relief component 6 and the first wall portion 13 are integrally formed, the first wall portion 13 is made of a steel material and can be made thinner. When a volume of the shell 1 is constant, a dimension of the shell 1 can be increased to provide more space for the electrode assembly 2, which is beneficial to improving the volume energy density of the battery cell 10.

In some embodiments, the steel material is carbon steel or stainless steel.

Carbon steel may be low-carbon steel, medium-carbon steel or high-carbon steel.

In some embodiments, the material of the pressure relief component 6 includes an aluminum alloy.

It can be understood that in the embodiment where the pressure relief component 6 and the first wall portion 13 are integrally formed, a material of the first wall portion 13 includes an aluminum alloy. If the first wall portion 13 is the end cover 12, the end cover 12 may be made of an aluminum alloy material; and if the first wall portion 13 is the wall portion of the case 11, the case 11 may be made of an aluminum alloy material.

The aluminum alloy has the characteristics of light weight and good ductility, and thus it is easier to machine the first groove 61 and the second groove 62 in the pressure relief component 6. In the embodiment where the pressure relief component 6 and the first wall portion 13 are integrally formed, the first wall portion 13 is made of an aluminum alloy, which can effectively reduce the difficulty of forming the first wall portion 13. Since the aluminum alloy has good ductility, it is easier to pile materials in the predetermined pressure relief region 63 when forming the first groove 61. However, making an angle formed between the first groove side surface 621 and the first surface 64 less than an angle formed between the second groove side surface 622 and the first surface 64 can effectively reduce the influence of material accumulation in the predetermined pressure relief region 63 on the performance of the battery cell 10, thereby prolonging the service life of the battery cell 10.

In some embodiments, the aluminum alloy includes the following components at mass percentage: aluminum≥99.6%, copper≤0.05%, iron≤0.35%, magnesium≤0.03%, manganese≤0.03%, silicon≤0.25%, titanium≤0.03%, vanadium≤0.05%, zinc≤0.05%, and other individual elements≤0.03%.

This aluminum alloy belongs to 3xxx series aluminum and thus has lower hardness and better forming ability, thereby reducing the difficulty of machining the first groove 61 and the second groove 62, which is beneficial to improving the accuracy of machining the first groove 61 and the second groove 62, and improving the pressure relief consistency of the pressure relief component 6.

In some embodiments, the aluminum alloy includes the following components at mass percentage: aluminum≥96.7%, 0.05%≤copper≤0.2%, iron≤0.7%, manganese≤1.5%, silicon≤0.6%, zinc≤0.1%, other individual elements≤0.05%, and total other elements≤0.15%.

This aluminum alloy belongs to 5xxx series aluminum, and the pressure relief component 6 made of this aluminum alloy has higher hardness, high strength, and good damage resistance. An embodiment of the present application provides a battery 100, including the battery cell 10 according to any one of the above embodiments.

An embodiment of the present application provides a battery 100, including the battery cell 10 according to any one of the above embodiments.

An embodiment of the present application provides an electrical device which includes the battery cell 10 provided by any one of the abovementioned embodiments, and the battery cell 10 is configured to provide electric energy to the electrical device.

An embodiment of the present application further provides a battery cell 10, where the battery cell 10 includes a shell 1 and an electrode assembly 2; the electrode assembly 2 is provided with a positive tab and a negative tab, and the electrode assembly 2 is accommodated in the shell 1. The shell 1 is in a cuboid shape and includes a case 11 and an end cover 12, an opening is formed in one end of the case 11, and the end cover 12 seals the opening; and the end cover 12 is provided with a positive electrode terminal and a negative electrode terminal, where the positive electrode terminal is electrically connected to the positive tab by means of one current collecting member 4, and the negative electrode terminal is electrically connected to the negative tab by means of the other current collecting member 4.

Please refer to FIG. 9 to FIG. 12, a wall portion of the case 11 opposite to the end cover 12 serves as the pressure relief component 6, the pressure relief component 6 is a rectangular wall portion, an outer surface of the pressure relief component 6 is provided with the first groove 61, an inner surface of the pressure relief component 6 is provided with two second grooves 62, in a width direction of the pressure relief component 6, the first groove 61 is located between the two second grooves 62, and the second groove 62 and the first groove 61 are arranged spaced apart. A minimum residual thickness of the first groove 61 is less than a minimum residual thickness of the second groove 62. The first groove 61 is in an H-shaped structure, and includes a first groove section 611, a second groove section 612, and a third groove section 613, where the first groove section 611, the second groove section 612, and the third groove section 613 all extend along a linear trajectory, the second groove section 612 and the third groove section 613 are arranged in parallel, the first groove section 611 is connected to the second groove section 612 and the third groove section 613, both the second groove section 612 and the third groove section 613 are perpendicular to the first groove section 611, a connection position between the first groove section 611 and the second groove section 612 is at a midpoint position of the second groove section 612, a connection position between the first groove section 611 and the third groove section 613 is at a midpoint position of the third groove section 613, and in a thickness direction X of the first wall portion, two ends of a projection of the second groove 62 in an extension direction respectively extend beyond the second groove section 612 and the third groove section 613. The first groove 61 is a stepped groove. The first groove 61 includes a two-stage groove, and each stage of the groove is in an H-shaped structure. The first groove section 611, the second groove section 612, and the third groove section 613 jointly define two predetermined pressure relief regions 63, each predetermined pressure relief region 63 is arranged corresponding to one second groove 62, and the pressure relief component 6 is configured to be able to split along at least a part of the first groove 61 when the battery cell 10 release pressure, and the second groove 62 is configured to guide at least a part of the predetermined pressure relief region 63 to flip to open at least a part of the predetermined pressure relief region 63. In a width direction Z of the second groove, the second groove 62 includes a first groove side surface 621 and a second groove side surface 622 arranged opposite to each other and connected to the inner surface of the pressure relief component 6, the first groove side surface 621 is closer to the predetermined pressure relief region 63 than the second groove side surface 622, the first groove side surface 621 is at an angle a to the inner surface of the pressure relief component 6, and the second groove side surface 622 is at an angle b to the inner surface of the pressure relief component 6, satisfying: 90°≤a<b<180°, and the width direction Z of the second groove is perpendicular to the thickness direction X of the first wall portion.

In the battery cell 10, since a<b< is equivalent to reducing an angle formed between the first groove side surface 621 and the first surface 64, which can reduce the amount of an excess material extruded when forming the second groove 62 diffusing to the predetermined pressure relief region 63, thereby reducing the height of a material pile bulge formed when the excess material extruded from a region of the pressure relief component 6 provided with the second groove 62 is accumulated in the predetermined pressure relief region 63, improving the flatness of the surface of the predetermined pressure relief region 63, reducing the risk of the predetermined pressure relief region 63 being opened prematurely due to poor surface flatness, and prolonging the service life of the battery cell 10.

It should be noted that, without conflict, the embodiments in the present application and the features in the embodiments may be combined with each other.

The above embodiments are only used for illustrating the technical solutions of the present application, and are not intended to limit the present application. For those skilled in the art, the present application may have various modifications and changes. Any modifications, equivalent substitutions, improvements, etc. made within the spirit and principles of the present application shall fall into the scope of protection of the present application.

## Claims

1. A battery cell, comprising:
a shell, comprising a first wall portion; and
a pressure relief component, arranged on the first wall portion, wherein the pressure relief component is provided with a first groove and a second groove, the first groove defines at least one predetermined pressure relief region, the pressure relief component is configured to be able to split along at least a part of the first groove when the battery cell releases pressure, in a thickness direction of the first wall portion, the pressure relief component has a first surface and a second surface opposite to each other, the second groove is recessed from the first surface toward the second surface, and the second groove is configured to guide at least a part of the predetermined pressure relief region to flip so as to open at least a part of the predetermined pressure relief region;
wherein in a width direction of the second groove, the second groove comprises a first groove side surface and a second groove side surface arranged opposite to each other and connected to the first surface, the first groove side surface is closer to the predetermined pressure relief region than the second groove side surface, the first groove side surface is at an angle a to the first surface, and the second groove side surface is at an angle b to the first surface, satisfying: 90°≤a<b<180°, and the width direction of the second groove is perpendicular to the thickness direction of the first wall portion.

2. The battery cell according to claim 1, wherein 90°≤a≤150°; and/or, 90°<b≤170°.

3. The battery cell according to claim 1 or 2, wherein the second groove further comprises a first groove bottom surface, the first groove bottom surface is connected to the first groove side surface and the second groove side surface, the second groove forms a first notch in the first surface, and in the width direction of the second groove, a width of the first groove bottom surface is L₁, and a width of the first notch is L₂, satisfying: L₁<L₂.

4. The battery cell according to claim 3, wherein 0.05 mm≤L₁≤0.3 mm; and/or, 0.4 mm≤L₂≤1.2 mm.

5. The battery cell according to any one of claims 1 to 4, wherein a minimum residual thickness of the first groove is D₁, and a minimum residual thickness of the second groove is D₂, satisfying: D₁<D₂.

6. The battery cell according to claim 5, wherein in the thickness direction of the first wall portion, a maximum groove depth of the first groove is H₁, and a maximum groove depth of the second groove is H₂, satisfying: H₂<H₁.

7. The battery cell according to claim 5 or 6, wherein 0.3 mm≤D₂≤1.2 mm.

8. The battery cell according to any one of claims 1 to 7, wherein the pressure relief component is provided with a plurality of said second grooves, the first groove defines a plurality of said predetermined pressure relief regions, and each of the predetermined pressure relief regions is arranged corresponding to at least one of the second grooves.

9. The battery cell according to claim 8, wherein the numbers of the predetermined pressure relief regions and the second grooves are both two; and
the first groove comprises a first groove section, and in the width direction of the second groove, the first groove section is located between the two second grooves, the two predetermined pressure relief regions are respectively located on both sides of the first groove section, and the first groove side surface is closer to the first groove section than the second groove side surface.

10. The battery cell according to any one of claims 1 to 9, wherein in the thickness direction of the first wall portion, a projection of the second groove does not overlap with a projection of the first groove.

11. The battery cell according to claim 10, wherein in the width direction of the second groove, the second groove and the first groove are arranged spaced apart.

12. The battery cell according to any one of claims 1 to 11, wherein in the thickness direction of the first wall portion, two ends of the projection of the second groove in an extension direction respectively extend beyond two ends of the projection of the first groove.

13. The battery cell according to any one of claims 1 to 12, wherein the first groove is recessed from the second surface toward the first surface.

14. The battery cell according to claim 13, wherein in the width direction of the second groove, the projections of the first groove and the second groove at least partially overlap.

15. The battery cell according to claim 13 or 14, wherein in the thickness direction of the first wall portion, a groove bottom surface of the second groove is closer to the second surface than a groove bottom surface of the first groove.

16. The battery cell according to any one of claims 13 to 15, wherein in the thickness direction of the first wall portion, the maximum groove depth of the second groove is H₂, and the minimum residual thickness of the first groove is D₁, satisfying D₁<H₂

17. The battery cell according to any one of claims 13 to 16, wherein the first groove comprises multiple stages of grooves arranged in sequence in a direction from the second surface to the first surface, and in the thickness direction of the first wall portion, in an adjacent two stages of grooves, one stage of groove away from the second surface is arranged in a groove bottom surface of one stage of groove close to the second surface;
wherein one stage of groove, arranged in the second surface, in the multiple stages of grooves is a first-stage groove, and in the width direction of the second groove, projections of the second groove and the first-stage groove at least partially overlap.

18. The battery cell according to claim 17, wherein in the thickness direction of the first wall portion, the groove bottom surface of the second groove is closer to the second surface than a groove bottom surface of the first-stage groove.

19. The battery cell according to any one of claims 1 to 12, wherein the first groove is recessed from the first surface toward the second surface.

20. The battery cell according to claim 19, wherein the first groove comprises multiple stages of grooves arranged in sequence in a direction from the first surface to the second surface, and in the thickness direction of the first wall portion, in an adjacent two stages of grooves, one stage of groove away from the first surface is arranged in a groove bottom surface of one stage of groove close to the first surface;
wherein one stage of groove, arranged in the first surface, in the multiple stages of grooves is a first-stage groove, and in the thickness direction of the first wall portion, the groove bottom surface of the first-stage groove is closer to the first surface than the groove bottom surface of the second groove.

21. The battery cell according to claim 20, wherein in the thickness direction of the first wall portion, the maximum groove depth of the second groove is H₂, and a maximum groove depth of the first-stage groove is H₃, satisfying: H₃<H₂.

22. The battery cell according to any one of claims 1 to 21, wherein the first surface is a surface of the pressure relief component facing an inside of the shell.

23. The battery cell according to any one of claims 1 to 21, wherein the first surface is a surface of the pressure relief component facing an outside of the shell.

24. The battery cell according to any one of claims 1 to 23, wherein the first groove comprises a first groove section and a second groove section, the first groove section is connected to the second groove section, and the first groove section and the second groove section jointly define at least one of the predetermined pressure relief region.

25. The battery cell according to any one of claims 1 to 23, wherein the first groove comprises a first groove section, a second groove section, and a third groove section, the second groove section and the third groove section are arranged opposite to each other, the first groove section is connected to the second groove section and the third groove section, in the width direction of the second groove, the first groove section and the second groove are arranged spaced apart, and the first groove section, the second groove section, and the third groove section jointly define at least one of the predetermined pressure relief region.

26. The battery cell according to claim 25, wherein a connection position between the second groove section and the first groove section deviates from two ends of the second groove section, and a connection position between the third groove section and the first groove section deviates from two ends of the third groove section, so that the predetermined pressure relief regions are formed on both sides of the first groove section.

27. The battery cell according to claim 25 or 26, wherein the first groove section extends along a linear or arc-shaped trajectory; and/or, the second groove section extends along a linear or arc-shaped trajectory; and/or, the third groove section extends along a linear or arc-shaped trajectory.

28. The battery cell according to any one of claims 1 to 8 and claims 10 to 23, wherein the first groove extends along an arc-shaped trajectory.

29. The battery cell according to any one of claims 1 to 28, wherein the second groove extends along a linear trajectory.

30. The battery cell according to any one of claims 1 to 29, wherein the pressure relief component and the first wall portion are integrally formed; or, the pressure relief component and the first wall portion are separably arranged, and the pressure relief component is mounted on the first wall portion.

31. The battery cell according to any one of claims 1 to 30, wherein the first groove is formed in the pressure relief component by stamping; and/or, the second groove is formed in the pressure relief component by stamping.

32. The battery cell according to any one of claims 1 to 31, wherein the first wall portion is a rectangular wall portion, and the first groove and the second groove are arranged in a width direction of the first wall portion.

33. The battery cell according to any one of claims 1 to 32, wherein the shell comprises:
a case, with an opening formed in at least one end; and
an end cover, corresponding to the opening one to one, the end cover sealing the opening;
wherein the at least one end cover serves as the first wall portion.

34. The battery cell according to any one of claims 1 to 32, wherein the shell comprises:
a case, with an opening formed in at least one end; and
an end cover, corresponding to the opening one to one, the end cover sealing the opening;
wherein at least one wall portion of the case serves as the first wall portion.

35. The battery cell according to claim 34, wherein the opening is formed only in one end of the case, and a wall portion of the case arranged opposite to the end cover serves as the first wall portion.

36. The battery cell according to claim 34, wherein the openings are formed in opposite ends of the case, and at least one wall portion of the case serves as the first wall portion.

37. The battery cell according to any one of claims 1 to 36, wherein a material of the pressure relief component comprises a steel material.

38. The battery cell according to claim 37, wherein the steel material is carbon steel or stainless steel.

39. The battery cell according to any one of claims 1 to 36, wherein a material of the pressure relief component comprises an aluminum alloy.

40. The battery cell according to claim 39, wherein the aluminum alloy comprises the following components at mass percentage: aluminum≥99.6%, copper≤0.05%, iron≤0.35%, magnesium≤0.03%, manganese≤0.03%, silicon≤0.25%, titanium≤0.03%, vanadium≤0.05%, zinc≤0.05%, and other individual elements≤0.03%.

41. The battery cell according to claim 39, wherein the aluminum alloy comprises the following components at mass percentage: aluminum≥96.7%, 0.05%≤copper≤0.2%, iron≤0.7%, manganese≤1.5%, silicon≤0.6%, zinc≤0.1%, other individual elements≤0.05%, and total other elements≤0.15%.

42. A battery, comprising the battery cell according to any one of claims 1 to 41.

43. An electrical device, comprising the battery cell according to any one of claims 1 to 41, wherein the battery cell is configured to provide electric energy to the electrical device.
